# EUROPÄISCHE PATENTANMELDUNG

(11) **EP 1 004 780 A2**
(43) Veröffentlichungstag der Anmeldung: **31.05.2000**
(21) Anmeldenummer: 99123187.9
(22) Anmeldetag: 24.11.1999
(51) Int. Cl.: F16B 5/00

(54) **Fügeverfahren zum Verbinden von Formkörpern**

(30) Priorität: 24.11.1998 DE 19854175; 24.11.1998 DE 19854173; 19.11.1999 EP 99123187
(71) Anmelder: Streuber, Fritz Michael, 32120 Hiddenhausen (DE)
(72) Erfinder: Streuber, Fritz Michael, 32120 Hiddenhausen (DE)
(74) Vertreter: Schwabe - Sandmair - Marx

(57) **Zusammenfassung**

Bei einem Fügeverfahren zum Verbinden von Formkörpern werden ein erster Formkörper (1) und ein zweiter Formkörper relativ zueinander (2) fixiert. Mittels einer Fügeklammer (10) wird in einem Fügebereich der Formkörper (1, 2) ein Raum (9) umschalt, in den jeder der Formkörper (1, 2) hineinragt. In dem umschalten Raum (9) wird ein Füllmaterial (20; 21; 20, 21) verfestigt oder einer Verfestigung überlassen, derart, dass die Formkörper (1, 2) in dem umschalten Raum (9) durch die Fügeklammer (10) und das verfestigte Füllmaterial (20; 21; 20, 21) zu einem festen Verbund verpresst werden.

## Beschreibung

Die Erfindung betrifft ein Fügeverfahren zum Verbinden von Formkörpern und einen Verbund von Formkörpern.

Insbesondere im Leichtbau stellt sich seit jeher ein Problem, Einzelstrukturen - im folgenden Formkörper genannt - so zu verbinden, dass die Erfordernisse des späteren Einsatzes erfüllt werden. Es besteht insbesondere die Forderung einer hohen mechanischen Belastbarkeit und Standfestigkeit bei möglichst geringem Gewicht und möglichst geringen Kosten für den Verbund und damit auch das Verbinden. Das Problem stellt sich grundsätzlich auch in anderen Bereichen, beispielsweise im Schiffsbau, wo großflächige Formkörper, wie zum Beispiel Rumpfsegmente, miteinander zu verbinden sind.

Eine Möglichkeit der Gewichtseinsparung stellt der Einsatz von Formkörpern aus aufgeschäumtem Schaummaterial, insbesondere Metallschaummaterial, oder Anteilen solcher Materialien dar. In der DE 43 18 540 A1 wird die Verwendung von Metallschaummaterial im Kraftfahrzeugbau vorgeschlagen. Karosseriebleche werden als Metallschaumformkörper mit einer oder zwei vollmetallischen Deckschichten und einer aufgeschäumten Metallschaumschicht verwendet. Zum Befestigen von Anbauteilen an diesen Karosserieblechen werden Blechschrauben und dübelartige Befestigungselemente erwähnt. In dem Band 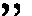 Metallschäume 1997", MIT Bremen, werden im Beitrag 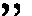 Joining of Alumium Foams" von N. Sedliakova et al. als Verbindungsmethoden für Metallschaumförmkörper Schraub-, Löt-, Klebe- und Schweißverbindungen und die Verwendung von eingeschäumten Befestigungselementen beschrieben. Analog dazu wird mit Kunststoff-Metallverbundschichtkörpern verfahren. Dies sind Formkörper, die aus einer Schicht Kunststoff und mindestens einer Schicht aus einem metallischen Material bestehen. Für diese Materialien sind Niet-, Schraub- und Klebeverbindungen bekannt.

Dies sind die zum Verbinden von Formkörpern in der Technik bewährten Verfahren mit ihren hinlänglich bekannten Vor- und Nachteilen. Auch die Verbindung von zwei oder mehr reinen Kunststoff-Verbundschichtkörpern und sogar von reinen Metallformkörpern ist mit solchen Verfahren in vielen Fällen problematisch.

Aufgabe der Erfindung ist es, einen festen Verbund von Formkörpern zu schaffen und eine zur Herstellung des Verbunds geeignete Verbindungstechnik bereit zu stellen. Es sollen insbesondere Formkörper aus Verbundschichtmaterialien zu einem festen Verbund miteinander verbunden werden können. Vorzugsweise sollen Formkörper aus beliebigen Materialien, auch unterschiedlichen Materialien miteinander verbunden werden können.

Nach der Erfindung werden zu verbindende Formkörper in einem ersten Schritt in ihrer für einen Verbund gewünschten Lage relativ zueinander fixiert. Bevorzugt werden sie hierzu miteinander verklammert. In einem Fügebereich, in dem eine Fügeverbindung der Formkörper hergestellt werden soll, wird mittels einer Fügeklammer ein Raum umschalt und dadurch begrenzt, in den die Formkörper hineinragen. Die Fügeklammer kann die genannte Verklammerung zur Fixierung der Formkörper vor der Bildung des Verbunds sein oder erst nach der Fixierung positioniert werden. Eine Umschalung des umschalten Raums kann von der Fügeklammer und den Formkörpern gemeinsam gebildet werden. Vorzugsweise bildet die Fügeklammer die Umschalung allein, und die Formkörper ragen in den derart vorgegebenen, umschalten Raum hinein. Die Umschalung dieses Raums ist vorzugsweise vollflächig geschlossen, kann grundsätzlich jedoch auch durchbrochen, insbesondere perforiert, sein. Füllmaterial wird in den mittels der Fügeklammer umschalten Raum eingebracht oder bereits vor dem Positionieren der Fügeklammer in dem Fügebereich, der in diesem Fall anschließend umschalt wird, positioniert. Vorzugsweise wird zuerst der umschalte Raum gebildet, und das Füllmaterial wird in den umschalten Raum eingebracht. Die Anordnung des Füllmaterials erfolgt derart, dass nach einer Verfestigung des Füllmaterials in dem umschalten Raum ein Pressdruck ensteht, der von der Umschalung aufgenommen wird und der in dem umschalten Raum auf die Formkörper wirkt. Die Formkörper werden so durch die Fügeklammer und das Füllmaterial zu einem festen Verbund verpresst.

Das Füllmaterial wird aus einem vorzugsweise fließfähigen Zustand verfestigt. Nicht nur ein flüssiges Material, sondern auch ein aufschäumbares Material, vorzugsweise ein aufschäumbares Kunststoffmaterial, das in dem umschalten Raum zum Aufschäumen gebracht und anschließend verfestigt wird, ist während des Schäumens im Sinne der Erfindung fließfähig und stellt ein bevorzugtes Füllmaterial dar. Grundsätzlich muss das Füllmaterial vor der Verfestigung nicht fließfähig sein, obgleich dies bevorzugt wird. Es kann auch aus einem plastischen oder elastischen Zustand heraus durch Komprimierung verfestigt werden. Nach der Verfestigung kann das Füllmaterial elastisch sein. Bevorzugt ist es nach der Verfestigung in sich starr, d.h. nicht nachgiebig.

Das Füllmaterial wird vorzugsweise so eingebracht, dass es den umschalten Raum gänzlich ausfüllt. Ein nur teilweises Ausfüllen genügt grundsätzlich auch, wenn eine sichere Verbindung, vorzugsweise form- und kraftschlüssige Verbindung, der Formkörper erzielt wird, die in den vorhersehbaren Lastfällen die Kräfte aufnimmt und überträgt. Das Füllmaterial drückt von innen gegen die Umschalung. Die Formkörper, die Fügeklammer und das Füllmaterial bilden einen Pressverbund.

Die Fügeklammer wird durch ein Hohlzylinderprofil gebildet oder umfasst ein Hohlzylinderprofil, vorzugsweise ein langgestrecktes Hohlzylinderprofil, mit dem sie den umschalten Raum bildet. Sie ist in ihrem Hohlzylinderprofil mit einer Öffnung versehen. Die Öffnung erstreckt sich vorteilhafterweise bis wenigstens zu einem stimseitigen Ende des Hohlzylinderprofils, und besonders bevorzugt ist sie als durchgehende Öffnung ausgebildet, so dass das Hohlzylinderprofil der Fügeklammer in Längsrichtung durchgehend offen ist. Die Fügeklammer wird auf entsprechend an den Formkörpern ausgebildete Anschlussprofile aufgesteckt, aufgelegt, aufgeschoben oder sonstwie geeignet in ihrer Lage in Bezug auf die passend zueinander gelegten Formkörper fixiert. In der für das Verpressen des Füllmaterials vorbereiteten Ausgangslage ragen somit jeweils Anschlussprofile der zu verbindenden Formkörper in den von der Fügeklammer begrenzten Raum. Ein Anschlussprofil eines Formkörpers kann an einem Rand des Formkörpers oder auch an jeder anderen zum Verbinden dienenden Anschlussstelle des Formkörpers gebildet sein.

Bevorzugt wird als Fügeklammer eine vorgefertigte separate Fügeklammer verwendet. Diese separate Fügeklammer wird an die zu verbindenden Formkörper angelegt, indem sie die Formkörper oder zumindest Teile der Formkörper umgreift. Dabei kann die Fügeklammer die zu verbindenden Formkörper bereits klemmend in ihrer für den Verbund gewünschten relativen Lage zueinander fixieren. Eine nicht klemmende Anbringung der Fügeklammer ist jedoch ebenfalls möglich.

Falls mehr als zwei Formkörper in einem gemeinsamen Fügebereich aneinanderstoßen, lässt sich auch solch ein Formkörperverbund durch Verwendung einer separaten Fügeklammer besonders einfach herstellen. Eine hierfür vorgesehene Fügeklammer kann beispielsweise durch ein sternförmiges Fügeklammerprofil gebildet werden.

Ein bevorzugt verwendeter Formkörper ist ein Verbundschichtkörper, der wenigstens eine Schicht mit einer Struktur, beispielsweise eine Wabenstruktur, oder wenigstens eine Schicht eines aufgeschäumten Materials, insbesondere Metallschaum oder ein Kunststoffschaummaterial, aufweist. Diese Schicht ist auf einer Deckschicht eines damit materialverträglichen Trägermaterials aufgebracht oder wird zwischen zwei solchen Deckschichten eingeschlossen. Eine typische Materialpaarung für einen Formkörper bilden aufgeschäumter Aluminiumschaum und Vollaluminium, Kunststoffschaum mit Kunststoffvollmaterial oder Vollaluminium, oder eine Kunststoff- oder Metallstrukturschicht mit Kunststoffvoll- oder Metallvollmaterial. Ein, mehrere oder jeder der zu verbindenden Formkörper kann bzw. können auch nur aus Schaummaterial bestehen.

Die Erfindung ist jedoch mit Vorteil auch bei Formkörpern aus herkömmlichen Kunststoffen, Blechen und sonstigen Profil- oder Schalenkörpern einsetzbar. Im besonderen ist sie vorteilhaft für das Fügen von allen Materialen, welche für thermische Fügeverfahren, zum Beispiel Schweißen oder Löten, problematisch sind. Bei Schichtkörpern aus Metall und Kunststoff ist dies aufgrund der stark unterschiedlichen Fügetemperaturen, zum Beispiel für das Schweißen, klar. Bei anderen Anwendungsbeispielen, wie zum Beispiel für das Verbinden von Formteilen aus Titanblech, ist die Erfindung ebenfalls vorteilhaft, weil solche Materialien sonst nur in einer geschlossenen Inertgasumgebung geschweißt oder gelötet werden können und dort bis zur Abkühlung auf die Umgebungstemperatur verbleiben müssen, da sonst die Oxidbildung die Materialeigenschaften erheblich verschlechtern würde.

Bei dem Füllmaterial handelt es sich bevorzugt um Kunststoffmaterial oder metallisches Material, das kaltverformbar oder halbwarmverformbar ist, oder eine Kombination dieser Materialien. Ein metallisches Material mit einer Entfestigungstemperatur, bei der die Formkörper ihre Form und Stabilität beibehalten, ist im Sinne der Erfindung fließfähig, nämlich bei Erreichen seiner spezifischen Entfestigungstemperatur.

Kunststoffmaterial als Füllmaterial kann ein Einkomponentenmaterial oder ein Mehrkomponentenmaterial, verstärkt oder unverstärkt, Schaummaterial, Kunstharz, Spritz- oder Extrusionsmasse oder eine Kombination von mehreren dieser Kunststoffmaterialien sein.

In bevorzugten Ausführungsbeispielen wird das Füllmaterial in einem fließfähigen Zustand in den umschalten Raum eingebracht. Ebenso kann ein im festen Zustand in dem umschalten Raum befindliches Füllmaterial, beispielsweise ein Granulat, im Verlaufe des Fügens in den fließfähigen Zustand überführt werden. Die Überführung erfolgt vorzugsweise durch Aufschmelzen oder Aufschäumen. Durch Verfestigung des Füllmaterials wird der Pressverbund hergestellt.

Zu seiner Verfestigung, insbesondere Aushärtung, kann das Füllmaterial erwärmt werden. Es kann auch ein bei Umgebungstemperatur sich verfestigendes Füllmaterial verwendet werden. Wird ein Füllmaterial verwendet, das bei der Verfestigung expandiert, beispielsweise ein Schaumsmaterial, so genügt bereits allein die Verfüllung des umschalten Raums mit diesem Füllmaterial zur Erzielung eines Pressverbunds. Expandiert das Füllmaterial nicht oder schrumpft es bei seiner Verfestigung sogar, so wird in dem umschalten Raum vorteilhafterweise eine Expansionseinrichtung angeordnet, mittels der das Füllmaterial gegen die Umschalung gepresst wird. Eine Expansionseinrichtung kann mit Vorteil auch in Kombination mit einem bei der Verfestigung expandierenden Füllmaterial zur Bildung des Pressverbunds zusammenwirken.

Die Expansionseinrichtung kann eine Einrichtung sein, mit der das Füllmaterial unter Druck in den umschalten Raum eingebracht und darin bis zu seiner Verfestigung unter Druck gehalten wird. Die Expansionseinrichtung kann auch eine Einrichtung sein, mit der ein Reaktionsfluid in ein durch Kunststoffmaterial gebildetes Füllmaterial eingebracht wird, wenn das Füllmaterial sich bereits in dem umschalten Raum befindet. Durch die Wirkung des Reaktionsfluids wird ein Schäumen des Kunststoffmaterials beeinflusst, vorzugsweise gesteuert. Ein Schäumen kann durch das Reaktionsfluid initiert, verstärkt, abgeschwächt oder abgebrochen werden. Das Reaktionsfluid kann insbesondere ein Treibmittel sein. Die Expansionseinrichtung umfasst in einer weiteren Ausführungsform einen aufweitbaren Druckkanal, der in dem umschalten Raum angeordent ist. Durch Aufweitung des Druckkanals wird Druck auf das umgebende Füllmaterial ausgeübt und das Füllmaterial dadurch gegen die Umschalung gepresst.

Es können vorteilhafterweise Füllpartikel wie Faserschnipsel aus Glas, Carbon oder einem anderen Material zusammen mit einem fließfähigen Füllmaterial oder vorher eingebracht werden, die einen Kraftschluss und/oder einen Formschluss der an dem Verbund beteiligten Komponenten noch weiter festigen.

In einer bevorzugten Weiterentwicklung wird der durch die Fügeklammer umschalte Raum von innen temperiert. Eine Temperierung zum Heizen oder Kühlen oder zum Heizen und Kühlen kann grundsätzlich durch jede geeignete Art von Kühl- oder Heizeinrichtung gebildet werden, beispielsweise durch Eintrag elektrischer Energie. Vorzugsweise wird wenigstens ein Strömungskanal in dem umschalten Raum angeordnet, durch den ein Kühl- oder Heizfluid geführt wird. Vorteilhaft ist die Innentemperierung insbesondere, wenn als Füllmaterial für den umschalten Raum warmvernetzende Harze, Duroplaste oder bei Verarbeitungstemperatur aufschäumende, mit Treibmittel versetzte Thermoplaste eingesetzt werden.

In einer bevorzugten Ausführungsform wird Temperierfluid im Gegenstrom durch den umschalten Raum geleitet. Hierfür können zwei Strömungskanäle eng beabstandet oder in direktem Wärmeleitkontakt nebeneinander verlaufen, durch die Temperierfluid gegenläufig hindurchgeleitet wird. In beide Strömungskanäle wird Temperierfluid mit der gewünschten Temperatur eingeleitet und im Gegenstrom durchgeleitet. Entlang des Strömungskanalpaars stellt sich die Temperiertemperatur besonders gleichmäßig ein. Anstatt durch strömungstechnisch getrennte Kanäle kann ein Temperierfluid durch die beiden Strömungskanäle hintereinander durchgeleitet werden. In beiden Strömungsführungen kann der eine der beiden Strömungskanäle den anderen umgeben.

In dem umschalten Raum können mehrere der vorstehend beschriebenen Strömungskanalpaare angeordnet sein. Es können auch Kombinationen von Strömungskanalpaaren und einzelnen Strömungskanälen gebildet werden.

Durch die Ausbildung von ineinanderliegenden Strömungskanälen und die Führung des Temperiermittels durch diese Strömungskanäle im Gegenstrom wird die Temperatur des Temperiermittels und damit letztlich des Füllmaterials besonders gleichmäßig über eine große Strömungskanallänge eingestellt. Nach einer besonders bevorzugten Ausführungsform von ineinanderliegenden Strömungskanälen ist ein äußerer Strömungskanal, in dem ein innerer Strömungskanal aufgenommen ist, an einem Ende, das im Füllmaterial liegen kann, abgeschlossen. Zum Heizen wird das heiße Temperierfluid in den inneren Strömungskanal eingeleitet, durchströmt den inneren Strömungskanal und tritt aus dem inneren Strömungskanal an dem abgeschlossenen Ende des äußeren Strömungskanals in den äußeren Strömungskanal ein. Anschließend strömt es in dem Zwischenraum zwischen dem inneren und dem äußeren Strömungskanal zurück zu einer Temperiereinrichtung. Es findet hierbei ein Wärmeausgleich zwischen dem Temperierfluid im inneren Strömungskanal und dem zurückströmenden Temperierfluid statt, der eine besonders gleichmäßige Temperatur des zurückströmenden Temperierfluids über die gesamte Strömungskanallänge bewirkt.

Anstatt des vorstehend beschriebenen, sackartigen Temperiermittels mit dem Einleiten des Temperierfluids und dem Ausleiten des Temperierfluids zur gleichen Seite, kann das Temperierfluid auch an den jeweils gegenüberliegenden Enden dieser Strömungskanäle eingeleitet und herausgeleitet werden. Dies ist jedoch nur dann möglich, wenn der innere und der äußere Strömungskanal an ihren beiden Enden aus dem umschalten Raum herausgeführt werden können. Im Folgenden wird daher statt von einem zurückströmenden Fluid allgemein nur von einem außen strömenden Fluid gesprochen.

Der innere Strömungskanal wird vorzugsweise über seine gesamte Länge, bevorzugt zentriert, beabstandet zu dem äußeren Strömungskanal gehalten. Hierzu dienen zwischen dem inneren Strömungskanal und den äußeren Strömungskanal angeordnete Abstandsshalter. Die Abstandshalter sind aus einem hitzebeständigen Material gefertigt, beispielsweise aus Keramik.

Vorzugsweise ist die Strömung des außenströmenden Temperierfluids turbulent. Hierdurch wird die Wärmeleitung von dem inneren Strömungskanal in das außenströmende Temperierfluid und von dem außenströmenden Temperierfluid zu dem Füllmaterial gegenüber einer laminaren Strömung erhöht. Als Mittel zur Erzeugung der Turbulenz können die Abstandshalter ausgebildet sein. Besonders bevorzugt wird die turbulente Außenströmung mittels eines Bandes bewirkt, das spiralig um den inneren Temperierkanal gewickelt ist. In bevorzugter Ausführung dient solch ein Band gleichzeitig auch als Abstandhalter, d.h. es sind darüber hinaus keine weiteren Abstandshalter erforderlich. Vorzugsweise ist das Band als gewirktes Band ausgebildet, insbesondere aus hitzebeständigen Fasern wie z.B. Glasfasern, Keramikfasern oder Kohlenstofffasern. Durch das spiralig auf den inneren Strömungskanal gewickelte Band wird das Temperierfluid ebenfalls spiralig in dem Zwischenraum zwischen dem inneren und dem äußeren Strömungskanal geführt und verwirbelt.

Im Falle der Verwendung von ineinanderliegenden Strömungskanälen kann nach Beendigung der Verfestigungvorgangs der äußere Strömungskanal im Füllmaterialgefüge verbleiben. Der verbliebene, äußere Strömungskanal verbessert die mechanischen Eigenschaften des Formkörpers. Dies kommt insbesondere dann zum Tragen, wenn die Innentemperierung in einem Verbundbereich mehrerer Formkörper eingesetzt wird. Der innere Strömungskanal sowie die Abstandhalter oder das Faserband können vorzugsweise aus dem äußeren Strömungskanal herausgenommen werden, um für eine Wiederverwendung zur Verfügung zu stehen. Der innere Strömungskanal und die Abstandhalter oder das die Abstandhalter ersetzende Faserband können jedoch ebenfalls im umschalten Raum verbleiben. Durch ein bevorzugtes Auffüllen des Hohlraums, der von dem äußeren Strömungskanal umschlossen wird, mit einem Kunststoffmaterial kann der Formkörper, oder der Verbundbereich mechanisch noch weiter verstärkt werden. Besonders bevorzugt ist die Verwendung eines Strömungskanals oder von ineinander liegenden Strömungskanälen, die aus Kohlefasermaterial hergestellt sind. Es entsteht auf diese Weise ein karbonverstärkter Verbund.

Eine Temperiereinrichtung weist vorzugsweise einen Verbrennungsmotor mit Turbolader auf. Als Heizfluid wird die Abluft verwendet. Als Kühlfluid wird die Zuluft zu dem Lader eingesetzt. Die Antriebskraft des Motors kann zur Stromerzeugung verwendet werden.

Ein im Fügebereich angeordneter Strömungskanal kann nicht nur zur Temperierung, sondern auch oder stattdessen zum Einbringen von Stoffen, insbesondere von Füllmaterial, verwendet werden. Er kann vorteilhafterweise dafür verwendet werden, ein Bündel von Verstärkungsfasern oder einen Faserverbundkörper zu durchtränken, insbesondere mit einem flüssigen Kunststoffmaterial, einem Bindemittel oder einem Reaktionsfluid. Das betreffende Fluid wird vorzugsweise mittels einer Pumpe solange durch den Strömungskanal gefördert, bis eine vollständige Benetzung der Fasern des Bündels oder des Faserverbundkörpers und Ausfüllung des umschalten Raums gwährleistet ist.

Bei Ausbildung von mehreren Strömungskanälen im Fügebereich können Mehrkomponentenkunststoffe, insbesondere Zweikomponenten-Kunststoffe, beispielsweise Harz und Härter, in den umschalten Raum eingebracht und gezielt an dem gewünschten Ort zur Reaktion gebracht werden.

Ein Strömungskanal, der dem Einbringen von Material in den umschalten Raum dient, ist vorzugsweise mit einer Mehrzahl von Öffnungen versehen, d. h. perforiert, um ein Temperier-, Binde- oder Reaktionsfluid gleichmäßig verteilt mit dem Kunststoffmaterial in Berührung zu bringen oder das Kunststoffmaterial selbst einzubringen.

In bevorzugten Ausführungen ist ein durch Innendruck aufweitbarer Druckkanal in dem umschalten Raum angeordnet. Das in dem umschalten Raum befindliche Kunststoffmaterial oder ein Teil davon wird durch den aufgeweiteten Druckkanal gegen die Umschalung gepresst. Durch Einsatz solch einer Expansionseinrichtung stehen auch Füllmaterialien, die bei einer Verfestigung einer Volumenreduktion unterliegen, für einen erfindungsgemäßen Pressverbund zur Verfügung.

Eine Verfüllung und Verfestigung solcher Materialien unter Bedruckung des umschalten Raums insgesamt, die grundsätzlich ebenfalls möglich wäre, ist nicht erforderlich. Das Füllmaterial wird besonders gleichmäßig gegen die Begrenzungsflächen des umschalten Raums gedrückt. Ein eventueller Schwund wird ausgeglichen.

In bevorzugten Verfahrensvarianten wird der Druckkanal zyklisch mit wechselnden Drücken und Temperaturen beaufschlagt. Durch solch ein Temperatur- und Druckwechselverfahren wird vorzugsweise ein in den umschalten Raum eingebrachtes Kunststoffmaterial mit Verstärkungsbestandteilen, z. B. eine Epoxidharz-Carbonfaser-Matrix verfestigt. Die Durchführung von reproduzierbaren Temperatur- und Druckwechselzyklen ermöglicht eine besonders gleichmäßige Auhärtung und Konsolidierung des eingebrachten Füllmaterials. In den Druckwechselzyklen wechseln vorteilhafterweise Überdruck und Unterdruck, gemessen gegenüber der Umgebung, ab. Eventuelle Gaseinschlüsse, insbesondere Lufteinschlüsse, im Füllmaterial, insbesondere in einem flüssigen Füllmaterial wie beispielsweise Kunstharz, werden durch die Erzeugung eines Unterdrucks im umschalten Raum beseitigt.

In einer bevorzugten ersten Ausführungsvariante wird ein Druckkanal in der Art eines Schlauchs durch ein flexibles Material gebildet, beispielsweise Silikon. Ein Druckkanal aus einem elastischen Material ist besonders vorteilhaft für die Durchführung von Druckwechseln.

In einer bevorzugten zweiten Ausführungsvariante wird der Druckkanal in der Art eines Rohrs aus einem kaltverformbaren Metall gebildet. Als Druckkanalmaterial eignet sich beispielsweise AlMg5MnN. Durch Beaufschlagung mit einem ausreichend hohen Innendruck wird der Druckkanal so weit aufgeweitet, dass ein fester Pressverbund entsteht. Im Rahmen der Umformung wird die Streckgrenze des Metalls des Druckkanals so weit überschritten, dass es im Bereich der Einsatztemperatur des Formkörperverbunds zu keiner Rückumformung kommt. Die Fügeklammer und in geringerem Maße auch die Formkörper bilden die begrenzende Form für den umzuformende Druckkanal.

Durch Erwärmung des Druckkanals, insbesondere mittels eines erwärmten Druckfluids, kann die Aufweitung auch im Wege einer Halbwarmumformung erfolgen. Wegen der Erwärmung kann mit deutlich niedrigeren Fluiddrücken gearbeitet werden. Entsprechend weniger Kraft muss auch die Fügeklammer aufnehmen, um den erhöhten Innendruck aufzufangen. Bei Betrachtung der Fließkurven, zum Beispiel des Werkstoffs AlMg5Mn, kann eine Verdopplung der logarithmischen Grenzformänderung bei Temperaturen um 200°C unter den Bedingungen des gleichmäßigen Streckziehens beobachtet werden. Die Halbwarmumformung erfolgt vorzugsweise bei einer Temperatur aus dem Bereich von 100 - 300° C.

Besonders vorteihaft für die Kombination der Materialien ist, wenn die Entfestigungstemperatur des Druckkanalmaterials der Schmelztemperatur des eingebrachten Füllmaterials, das vorzugsweise durch Kunststoffmaterial gebildet wird, entspricht. Die Entfestigungstemperatur des Druckkanals und die Schmelztemperatur des Füllmaterials sollten geringer als die Losglühtemperatur respektive die Schmelztemperatur der Materialien der Formkörper und der Fügeklammer sein.

Bei Aufweitung eines Druckkanals in dem umschalten Raum wird die Fügeklammer vorzugsweise konstruktiv so steif ausgelegt, dass sie die entstehende Druckbelastung ohne Verformung aufnimmt.

In vorteilhafter Doppelfunktion bildet ein Strömungskanal für ein Temperierfluid auch den Druckkanal, der die Verpressung im umschalten Raum bewirkt oder mitbewirkt. Zusätzlich zu dem Strömungskanal aus vorzugsweise einem kaltverformbaren Metall, zum Beispiel AlMg5MnN, wird ein thermoplastischer Kunststoff, zum Beispiel Polyamid oder thermoplastisches Polyurethan, mit oder ohne Verstärkungsmaterial in den umschalten Raum zwischen den Kanal und die Umschalung eingebracht. Danach wird das Fluid im Strömungskanal auf die Verarbeitungstemperatur des Kunststoffmaterials erwärmt, zum Beispiel für Polyamid auf eine Temperatur aus dem Bereich von 185 - 240° C. Nach Erreichen der Schmelztemperatur des Thermoplasts wird der Druckkanal mit dem für seine Halbwarmumformung notwendigen Druck beaufschlagt. Der Druckkanal expandiert und füllt den umschalten Raum zusammen mit dem geschmolzenen Kunststoffmaterial aus. Unter Aufrechterhaltung des Drucks wird der Druckkanal durch Einleitung eines Kühlfluids in eine formbeständige Phase übergeleitet. So ergibt sich ein stabiler Pressverbund.

Die Herstellung des verpressten Formkörperverbunds durch Kalt- oder Halbwarmverformung eines in den umschalten Raum eingelegten Druckkanals kann auch allein zur Herstellung des Formkörperverbunds verwendet werden, obgleich die Kombination mit einem dadurch verpressten Füllmaterial, das sich in einen fließfähigen Zustand befindet, besonders bevorzugt wird.

Vorteilhaft ist, wenn das Kunststoffmaterial den Pressverbund abdichtet. Metallische Komponenten im umschalten Raum sind so gegenüber dem Eindringen von aggressiven Medien geschützt, und eine nicht kontrollierbare Korrosion im Innenraum der Pressverbundes wird verhindert. Zu diesem Zweck eingesetzte Thermoplaste sind vorzugsweise hydrolysebeständig, beispielsweise thermoplastische Polyurethane auf Polyetherbasis. Vorteilhaft sind thermoplastische Polyurethane (TPU) auch deshalb, weil sie dazu neigen, im Rahmen des Aufschmelzvorgangs mit metallischen Oberflächen zu verkleben.

Ein Einsatz von Thermoplasten als Füllmaterial beinhaltet auch ohne die vorgenannte spezielle Verwendung den Vorteil, dass sich aus Ihnen Profile in beliebiger Form, zum Beispiel Strangpressprofile, ausformen lassen. In einer bevorzugten Weiterentwicklung wird bzw. werden ein solches Profil oder auch mehrere Profile in den umschalten Raum zwischen Fügeklammer und Formkörper eingeführt. Vorzugsweise wird der Strömungskanal in einem vorgeordneten Schritt in einen dafür vorgesehenen Hohlraum des Thermoplastprofils eingeführt, so dass Strömungskanal und Thermoplastprofil in einem Schritt in den umschalten Raum eingeführt werden können. Das Thermoplastprofil wird bevorzugt zugleich als Abstandhalter für die Zentrierung des Strömungskanals im umschalten Raum und ebenso als Federelement ausgelegt, welches den Verbund aus Formkörper und Fügeklammer in der gewünschten Lage vorfixiert.

Vorteilhaft ist diese Anordnung auch beim Zusammenfügen von gebogenen Profilen und Formkörpern, da hier ein gewisses Spiel zwischen Formkörpern und Fügeklammer benötigt wird, um möglicherweise differierende Radien, insbesondere differierende Biegeradien, auszugleichen. Vor der engültigen Fertigstellung des Pressverbunds wird sichergestellt, dass die Formkörper und die Fügeklammer oder die mehreren Fügeklammern sich in der gewünschten Ausrichtung befinden.

In einer bevorzugten Ausführung wird ein Einlegeprofil, insbesondere ein Thermoplastprofil, dazu genutzt, unverträgliche Materialien, wie zum Beispiel Edelstahl und Aluminium, zu trennen und eine galvanische Kontaktkorrosion zu verhindern. Hierzu wird das Einlegeprofil so ausgebildet, dass es die Kontaktflächen zwischen Formkörpern und Fügeklammer und/oder zu einem aufzuweitenden Strömungskanal vollflächig abdeckt und somit eine Sperr- und Isolationsschicht bildet.

Mit Vorteil wird in den Fügebereich vor, bei oder nach dem Positionieren der Fügeklammer eine Verstärkungsstruktur zusätzlich zu der bereits verstärkenden Fügeklammer oder eine Mehrzahl von Verstärkungsstrukturen eingebracht. Durch Einbringen einer Verstärkungsatruktur kann der Fügebereich vorteilhafterweise auch mit zusätzlichen Funktionen ausgestattet werden. Die Verstärkungsstruktur ist vorzugsweise ein an den umschalten Raum angepasst vorgeformter Faserverbundkörper mit Kunstoff-, Glas-, Keramik-, Mineral-, Kohlenstoff- oder Metallfasern oder einer Kombination daraus, die in einer Kunststoffmatrix eingebettet sind, oder ein Faserstrang, in dem Einzelfasern gebündelt, beispielsweise miteinander verflochten oder nur verwunden sind.

Bevorzugt wird nach dem Einbringen der Verstärkungsstruktur der umschalte Raum mit der eingelegten Verstärkungsstruktur bei vorzugsweise Raumtemperatur mit einer warmvernetzenden Harzmischung, zum Beispiel Epoxydharz, vollständig ausgefüllt. Dies wird vorzugsweise erreicht, indem mittels einer Pumpe, beispielsweise einer Schauchpumpe, das Harz hineingefördert und durch den von der Pumpe erzeugten Unterdruck angesaugt wird bis Harz an der Saugseite des umschalten Raums wieder austritt.

Wenn dieses System in einem geschlossenen Pumpenkreislauf arbeitet, ist es möglich, über eine einfache volumetrische Berechnung die gewünschte Harzmenge in den umschalten Raum einzubringen. Von Vorteil ist, dass nach der vollständigen Durchtränkung der Verstärkungsstruktur durch Abpumpen des überschüssigen Harzes das Harzvolumen auf die berechnete Menge reduziert werden kann. Die verbleibende Harzmenge kann sehr einfach mittels einer Kontrolle des Füllstands an einem transparenten Vorratsbehälter für das Harz durchgeführt werden. Mit dieser Verfahrensführung wird der umschalte Raum zugleich evakuiert. Es wird somit das Risiko von Lufteinschlüssen im Harz, d.h. von Lunkern, minimiert.

In einer bevorzugt anschließenden Verfahrensführung wird ein Strömungskanal als Temperierkanal verwendet und mit einem Temperierfluid befüllt und im Kreislaufverfahren auf eine Temperatur unterhalb der Vernetzungstemperatur des Harzes erhitzt. Nimmt man als Anwendungsbeispiel ein Epoxydharz, welches bei 175 °C aushärtet, so wird das Temperierfluid auf etwa 160° C erhitzt. Hat das Temperierfluid diese Zieltemperatur durchgehend erreicht, wird der Strömungskanal als Druckkanal verwendet und soweit mit Druck beaufschlagt bis ein Umformungsprozess einsetzt. Der notwendige Druck hängt hierbei von dem Material des Strömungskanals ab. Wird ein Strömungskanal aus AlMg5Mn (EN AW -5182-0) verwendet, so sollte der Druck rund 220 - 240 MPA sein. Im Rahmen dieser Halbwarmumformung expandiert der Strömungskanal und füllt den umschalten Raum zusammen mit der umgebenden Harz/Verstärkungsfaser- Matrix vollständig aus. In einem bevorzugt folgenden Schritt wird die Temperatur unter Beibehaltung des Drucks auf die Vernetzungstemperatur des Harzes, im vorgenannten Beispiel 175°C, erhöht und dort entsprechend der Zeitvorgabe des Harzherstellers für das Aushärten gehalten. Nach dem Aushärten kann das Fluid auf Raumtemperatur abgekühlt oder gegen Fluid bei Raumtemperatur ausgetauscht werden, und es wird der Druck abgesenkt, um schließlich den Strömungskanal zu entleeeren.

In weiteren Schritten kann dieses Verfahren auch dazu verwendet werden, um die eingesetzten Materialien zur Konsoldierung des Werkstoffverbunds einer nachträglichen Temperatur- oder Druckbehandlung zu unterziehen.

Es können insbesondere auch mehr als zwei Formkörper verbunden werden. Hierfür wird in einem Kreuzungsbereich von Formkörpern ein mehrarmiges Brückenelement verwendet. Falls Druckkanäle zum Fügen verwendet werden, wird in dem Bereich des Brückenelements sichergestellt, dass kreuzende Strömungskanäle sich nicht gegenseitig bei ihrer Expansion zudrücken können und so eine Durchströmung eines Kanals unterbunden würde. Dies wird erreicht, indem das Brückenelement Druckkanäle in unterschiedlichen Ebenen aufnimmt und eine Expansion von Druckkanälen einschränkt. Die Druckkanäle können in Hinterschneidungen hineinexpandieren, die im Brückenelement bevorzugt ausgebildet sind, und werden so im Brückenelement verankert

In sämtlichen Ausführungen der Erfindung kann ein Abschlussprofil in einem Längsspalt zwischen den dort sonst aneinander stoßenden Formkörpern in Höhe Ihrer Berührungsebene angeordnet werden. Das Abschlussprofil kann als Dichtungsprofil oder Ausgleichsprofil oder Stützprofil dienen oder eine Kombination dieser Funktionen erfüllen.

Vorteilhaft ist, wenn das Abschlussprofil den umschalten Raum in Längsrichtung abdichtet. Hierdurch können niedrig viskose Materialien, in dem umschalten Raum einfacher verarbeitet werden. Mittels des Abschlussprofils können mit einer Fügeklammerform und -größe auch Formkörper mit Anschlussprofilen unterschiedlicher Stärke einfacher verbunden werden, beispielsweise ein einschichtiger und ein mehrschichtiger Formkörper. Das Abschlussprofil gleicht die Unterschiede aus. Ebenso von Vorteil ist, dass durch ein Abschlussprofil eine glatte Oberfläche an einer dem umschalten Raum gegenüberliegende Außenkontur erreicht werden kann, beispielsweise für Fahrzeuge, die aus strömungstechnischen Gründen eine glatte äußere Außenkontur benötigen.

Für bestimmte Verwendungen des Formkörperverbunds ist es vorteilhaft, wenn ein Abschlussprofil eine gute Wärmeleitfähigkeit besitzt. Das Abschlussprofil und vorzugsweise in Kombination damit ein Strömungskanal können zur Temperierung, nämlich zur Kühlung und/oder Erwärmung eines Formkörpers des Verbunds dienen. Wärme kann entweder von dem betreffenden Formkörper in den Strömungskanal oder in der umgekehrten Richtung geleitet und von einem Fluid in dem Strömungskanal aufgenommen oder abgegeben werden.

Bei großen Formkörpern, zum Beispiel bei Segelbootrümpfen im Bereich von Anschlagpunkten für Wanten und Frachtbehälter oder bei Tragflügeln von Flugzeugen, kann es notwendig sein, große Kräfte in den Formkörper einzuleiten. Hierfür kann erfindungsgemäß eine in dem umschalten Raum angeordnete Verstärkungsstruktur verwendet werden, die insbesondere durch einen Faserstrang oder Faserverbundkörper, aber auch durch einen Strömungskanal gebildet werden kann. Die Verstärkungsstruktur wird an einer oder mehreren geeigneten Stellen aus dem Formkörperverbund herausgeführt und vorzugsweise zu einem Anschlagpunkt, zum Beispiel in Form einer Öse, ausgebildet. Im Bereich des Herausführens ist vorzugsweise ein Überwurfprofil vorgesehen, dass unmittelbar die Anschlussprofile der Formkörper oder bevorzugt die Fügeklammer umklammert. Bildet ein Faserverbundkörper die Verstärkungsstruktur, so handelt es sich vorzugsweise um einen harzbenetzten Faserverbundkörper, ein sogenanntes Prepreg. Als Verstärkungsstruktur kann auch bereits die Fügeklammer dienen. Bevorzugt wird jedoch eine Verstärkungsstruktur in der mechanisch unkritischen Nulllage des Fügebereichs angeordnet, so dass sie eine neutrale Faser oder Seele bildet.

Durch die Erfindung wird es möglich, den Fügebereich von Formkörpern gezielt als verstärkendes Element des Formkörperverbunds zu verwenden. Bereits der Pressverbund in der durch die Fügeklammer gebildeten Umschalung bildet eine Verstärkung des Verbunds, insbesondere für große Strukturen. So kann der erfindungsgemäße Fügebereich die strukturverstärkende Funktion von Spanten und Stringern erfüllen und solche Spanten und Stringer ersetzen, beispielsweise im Flugzeug- und Schiffsbau oder auch im Kraftfahrzeugbau, wo vergleichbare strukturverstärkende Elemente eingesetzt werden. Besonders geeignet für einen Ersatz solcher verstärkenden Elemente ist ein erfindungsgemäßer Fügebereich, wenn darin eine Verstärkungsstruktur, wie beispielsweise ein Faserverbundkörper oder ein Faserstrang, eingelegt ist.

Besonders vorteilhaft ist das erfindungsgemäße Fügen, wenn die Formkörper aus Schichtkörpern mit metallischen Deckschichten bestehen. Die bekannten Verbindungtechniken bringen, wie eingangs bereits erwähnt, erhebliche Probleme bei Schichtkörpern mit sich, da sie die Gefahr des Ausreißens oder Bruchs erhöhen. Eine außenseitige, flächige Verbindung von harzbenetzten Faserverbundsträngen und metallischen Öberflächen ist aufgrund der schlechten Haftung zwischen Metall und Kunststoff kritisch. Zudem schädigt eine Vorbehandlung der metallischen Oberflächen mit ätzenden Reinigungs- und Beschichtungsmitteln die Eigenschaften dieser metallischen Schichten. Mit der erfindungsgemäßen Lösung werden diese Probleme umgangen.

Ein bei der Herstellung des Verbunds als Temperierkanal und/oder Druckkanal dienender Strömungskanal, insbesondere ein metallischer Strömungskanal, kann vorteilhaft zur Temperierung, nämlich zur Kühlung und/oder Erwärmung eines Formkörpers des Verbunds in späteren Anwendungen des Verbunds dienen. Dies kann insbesondere in Anwendungen in der Luft- und Raumfahrt vorteilhaft sein. Wärme kann entweder von dem betreffenden Formkörper in den Strömungskanal oder in der umgekehrten Richtung geleitet und von einem Fluid in dem Strömungskanal aufgenommen oder abgegeben werden. Statt thermischer Energie oder auch in Kombination damit, kann der Strömungskanal auch zum Transport elektrischer Energie und/oder von Daten verwendet werden.

Durch Einleitung eines gekühlten Fluids in einen im Fügebereich angeordneten Strömungskanal kann der gesamte Fügebereich gekühlt und somit die Festigkeit des Fügeverbunds auch bei hohen Formkörpertemperaturen bewahrt werden. Ebenso ist es möglich, vereisungsgefährdete Sektionen eines Flugzeugs durch Einbringung eines erwärmten Fluids in den Strömungskanal vor Vereisung zu schützen. Es kann erwärmtes Kühlwasser eines Fahrzeugmotors, einer Klimaanlage oder eines anderen Aggregats in den Strömungskanal eingeleitet und die Energie an die Außenkontur der Formkörper abgegeben werden.

Bevorzugte Ausführungsbeispiele werden nachfolgend anhand von Figuren erläutert. Es zeigen:
- Fig. 1a-d: Fügebereiche von Formkörpern mit angelegten Fügeklammern fixiert für einen Verbund und vor dem Einbringen von Füllmaterial,
- Fig. 2: den Fügebereich der Fig. 1d nach Herstellung des Verbunds,
- Fig. 3a: einen Fügebereich, in dem ein Strömungskanal für ein Temperiermittel oder zum Einbringen des Füllmaterials angeordnet ist,
- Fig. 3b: den Fügebereich der Fig. 3a in einem Längsschnitt,
- Fig. 3c: den Fügebereich der Fig. 3a nach Herstellung des Verbunds,
- Fig. 4: einen Fügebereich, in dem ein aufweitbarer Druckkanal und ein Förderkanal angeordnet sind,
- Fig. 5a: einen Fügebereich, in dem ein Faserbündel unter Spannung gehalten ist,
- Fig. 5b: den Fügebereich der Fig. 5a nach Herstellung des Verbunds,
- Fig. 6a: einen Fügebereich, in dem ein aufweitbarer Druckkanal angeordnet ist,
- Fig. 6b: den Fügebereich der Fig 6a nach Herstellung des Verbunds,
- Fig. 7a: einen Fügebereich, in dem ein aufweitbarer Druckkanal einer zweiten Ausführung angeordnet ist,
- Fig. 7b: den Fügebereich der Fig 7a nach Herstellung des Verbunds,
- Fig. 8a: einen Fügebereich, in dem ein aufweitbarer Druckkanal und ein Kunststoffprofil angeordnet sind,
- Fig. 8b: den Fügebereich der Fig 8a nach Herstellung des Verbunds,
- Fig. 9a: einen Fügebereich, in dem ein aufweitbarer Druckkanal und ein als Fixierfeder ausgebildetes Kunststoffprofil angeordnet sind,
- Fig. 9b: den Fügebereich der Fig 9a nach Herstellung des Verbunds,
- Fig. 10a: einen Fügebereich, in dem ein aufweitbarer Druckkanal und ein als Fixierfeder und Dichtung dienendes Kunststoffprofil angeordnet sind,
- Fig. 10b: den Fügebereich der Fig 10a nach Herstellung des Verbunds,
- Fig. 11a: einen Fügebereich, in dem ein aufweitbarer Druckkanal und ein Abschlussprofil angeordnet sind,
- Fig. 11b: den Fügebereich der Fig 11a nach Herstellung des Verbunds,
- Fig. 12: einen Fügebereich von vier Formkörpern,
- Fig. 13: den Fügebereich der Fig. 12 in einem Schnitt und
- Fig. 14: einen Fügebereich mit ineinanderliegenden Strömungskanälen.

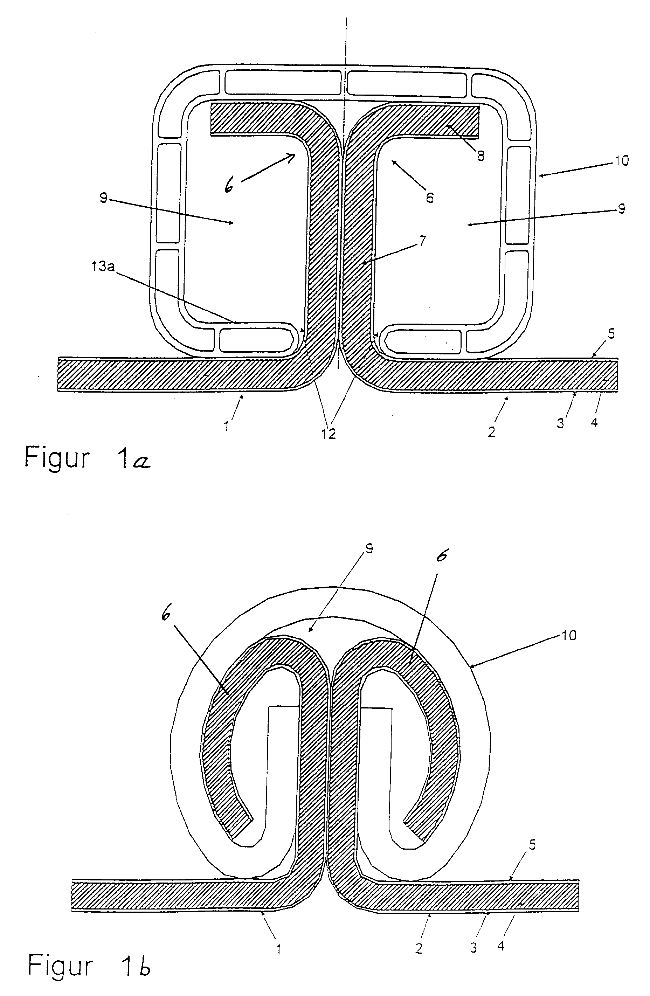

Fig. 1a zeigt einen Fügebereich eines ersten Formkörpers 1 und eines zweiten Formkörpers 2 in einem Querschnitt. Bei den Formkörpern 1 und 2 handelt es sich um entsprechend dem späteren Verwendungszweck vorgeformte Segmente, beispielsweise Karosseriebleche, Schalenstrukturen für ein Armaturenbrett eines Kraftfahrzeugs, Rumpf- oder Mastsegmente eines Schiffs oder Boots oder Flugzeugsegmente. Zur Herstellung der Formkörper 1 und 2 wird ein plattenförmiges Halbzeug verwendet. Die Formkörper 1 und 2 werden durch aufgeschäumte Metall- oder Kunststoffschaumformkörper gebildet. Dabei handelt es sich um dreischichtige Profile, deren mittlere Schicht 4 eine aufgeschäumte Schaumschicht ist. Die mittlere Schicht 4 wird beidseitig durch je eine Deckschicht 3 und 5 aus Vollmaterial bedeckt. Statt einer Schaumschicht kann als mittlere Schicht 4 eine einfache Schicht eines Vollmaterials, eine Wabenstruktur oder sonstige Struktur verwendet werden. Aus solch einem Halbzeug werden nach Durchführung eines Trennverfahrens die Formkörper 1 und 2 durch Kalt- oder Warmverformung erhalten. Ebenso bevorzugt sind Formkörper aus faserverstärkten Kunststoffmaterialien, die nicht unbedingt Schichtmaterialien sein müssen, sowie Metall-Kunststoff-Komposite und Metall-Kunstoffschaum-Komposite.

An jedem der Formkörper 1 und 2 ist längs einer seiner Seitenkanten je ein Anschlussprofil 6 durch zweifaches Umformen, insbesondere Umbiegen oder Umkanten, ausgebildet. Solch ein Anschlussprofil 6 in Form einer Bördelkante weist einen vom jeweiligen Formkörper 1 bzw. 2 abragenden ersten Steg 7 und einen daran anschließenden, wieder zum gleichen Formkörper hin umgeformten zweiten Steg 8 auf Der zweite Steg 8 verläuft im Ausführungsbeispiel beabstandet parallel zu dem darunter liegenden Endbereich des jeweiligen Formkörpers 1 bzw. 2.

Zum Herstellen eines Formkörperverbunds werden die Formkörper 1 und 2 mit ihren Anschlussprofilen 6 aneinander stoßend in Position gelegt und in dieser Position fixiert. Anschließend wird eine Fügeklammer 10 angelegt, so dass die aneinander stoßenden Anschlussprofile 6 von der Fügeklammer 10 umgriffen werden.

Die Fügeklammer 10 wird durch ein im Querschnitt viereckiges Hohlzylinderprofil aus einem Hohlkammermaterial gebildet, das in seiner Längsrichtung von einer geraden, von einer Stirnseite zur anderen Stirnseite durchgehenden Öffnung 12 durchbrochen wird.

Die Fügeklammer 10 kann als Hohlkammer-Strangressprofil ausgebildet sein. Sie kann auch aus einem plattenförmigen Halbzeug hergestellt sein. Ist letzteres der Fall, wird das Halbzeug rechteckförmig zugeschnitten und zu dem Hohlzylinderprofil kaltverformt, beispielsweise gebogen oder gewalzt. Ebenso wäre die Herstellung aus einem hohlzylindrischen Halbzeug durch Heraustrennen der Längsöffnung 12 oder als Formteil möglich. Die Fügeklammer 10 wird vorzugsweise aus Metall oder einem festen Kuntstoffmaterial hergestellt.

Nach dem Anlegen umgreift die Fügeklammer 10 die beiden aneinander stoßenden Anschlussprofile 6. Ihre beiden die Öffnung 12 begrenzenden Längskanten kommen beidseits der Anschlussprofile 6 im Bereich der ersten Stege 7 zu liegen. Die voneinander weg weisenden zweiten Stege 8 kommen in einem von dem Hohlzylinderprofil der Fügeklammer 10 umschalten Raum 9 zu liegen, wobei die Stege 8 Klammerschenkeln 13 gegenüberliegen. Die Fügeklammer 10 wird längs auf die Anschlussprofile 6 aufgeschoben, da ihr Hohlzylinderprofil nicht verformbar ist. Sie weist eine ausreichend große Eigensteifigkeit aus, so dass sie bei einem späteren Aufschäumen mit einem Schaummaterial oder Verfüllen mit einem Kunststoffmaterial die Schalungsfunktion und eine damit einhergehende Verklammerungsfunktion für den Verbund ausüben kann.

Die Fügeklammer 10 wird in der gezeigten Lage gehalten, indem sie den Fügebereich mit den beiden Anschlussprofilen 6 wie eine Schale umgibt. Im Ausführungsbeispiel bilden die voneinander weg weisenden zweiten Stege 8 und eine Oberseite der Formkörper 1 und 2 eine Auflage für die Fügeklammer 10. Die Fügeklammer 10 kann grundsätzlich jedoch auch mit einer geringen Elastizität ausgestattet sein, so dass sie bereits in der gezeigten Ausgangsstellung die beiden Formkörper 1 und 2 zusammenklemmt und fixiert, insbesondere indem sie die Stege 7 im Bereich der Öffnung 12 der Fügeklammer 10 gegeneinander presst. Es wäre bei entsprechend abgestimmten Formgebung der Formkörper 1 und 2 und der Fügeklammer 10 auch möglich, die Fügeklammer 10 auf den Formkörpern 1 und 2 oder deren Anschlussprofilen 6 aufsitzend in der für den Verbund gewünschten Lage formschlüssig zu halten.

Die Fig. 1a bis 1d zeigen Formvarianten der Fügeklammer 10 mit den entsprechenden Anschlussprofilen 6 der Formkörper 1 und 2.

Die Anschlussprofile 6 des Ausführungsbeispiels der Fig. 1d werden im Falle von Metallschaumformkörpern durch einmaliges Umkanten oder Umbiegen parallel je einer Längskante jedes der Formkörper 1 und 2 gebildet. Die Längskanten der Formkörper 1 und 2 sind um mehr als 90° umgebogen und dadurch zum jeweiligen Formkörper hin wieder zurückgebogen, wodurch ein V-förmiger Innenkantenbereich entsteht. In Anpassung an diese beiden Anschlussprofile 6 weist die Fügeklammer 10 ein Hohlkammerprofil auf, welches im Querschnitt eine hohlzylindrische Dreieckform besitzt, wobei das Dreieck an einer Spitze in Ausbildung der Längsöffnung 12 offen ist. Nach einem Aufschieben der Fügeklammer 10 über die Anschlussprofile 6 der Formkörper 1 und 2 weist diese Anordnung im Fügebereich die Form einer Schwalbenschwanzverbindung auf. Die gleiche Form der Anschlussprofile 6 ist bei Formkörpern aus anderen Materialien ebenfalls vorteilhaft.

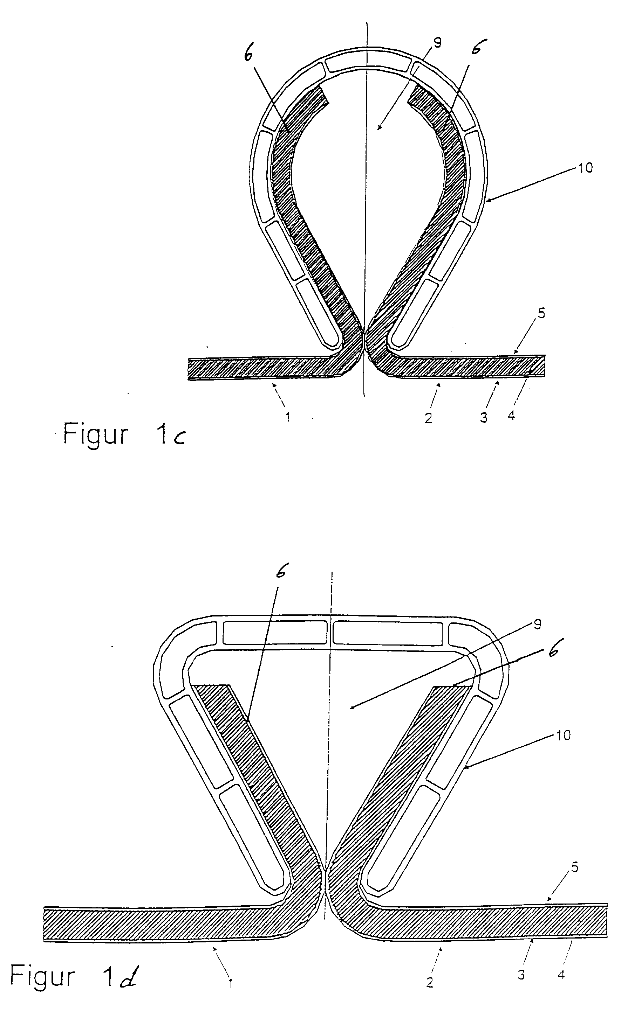

Fig. 2 zeigt den Fügebereich des Formkörperverbunds der Fig. 1d nach dem Einbringen von Füllmaterial 20 in den umschalten Raum 9, d. h. in den freien Hohlraum, der durch die Umklammerung der Fügeklammer 10 gebildet wird. Das Füllmaterial 20 kann Kunststoffschaummaterial, Kunstharz, Kunstharz mit Verstärkungsmaterial oder ein anderes Kunststoffmaterial, beispielsweise ein vorgefertiges Kunststoffprofil sein, wobei der umschalte Raum 9 vollkommen ausgefüllt und in dem umschalten Raum 9 ein Pressdruck auf die Anschlussprofile 6 ausgeübt wird, den die Fügeklammer 10 aufnimmt. Die Formkörper 1 und 2 sind im Ausführungsbeispiel der Fig. 2 durch die Fügeklammer 10 form- und kraftschlüssig im Verbund gehalten.

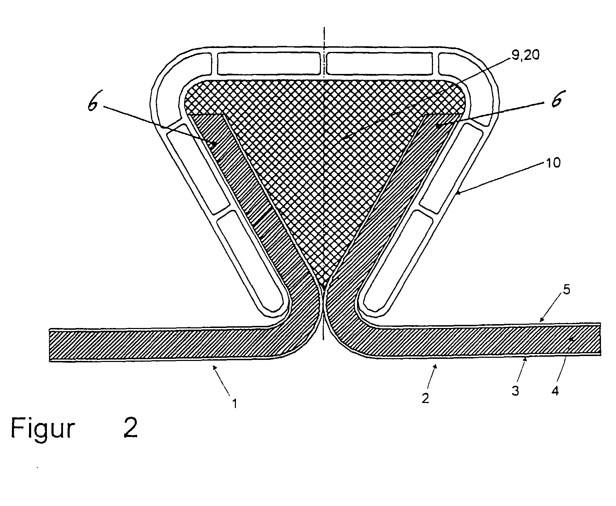

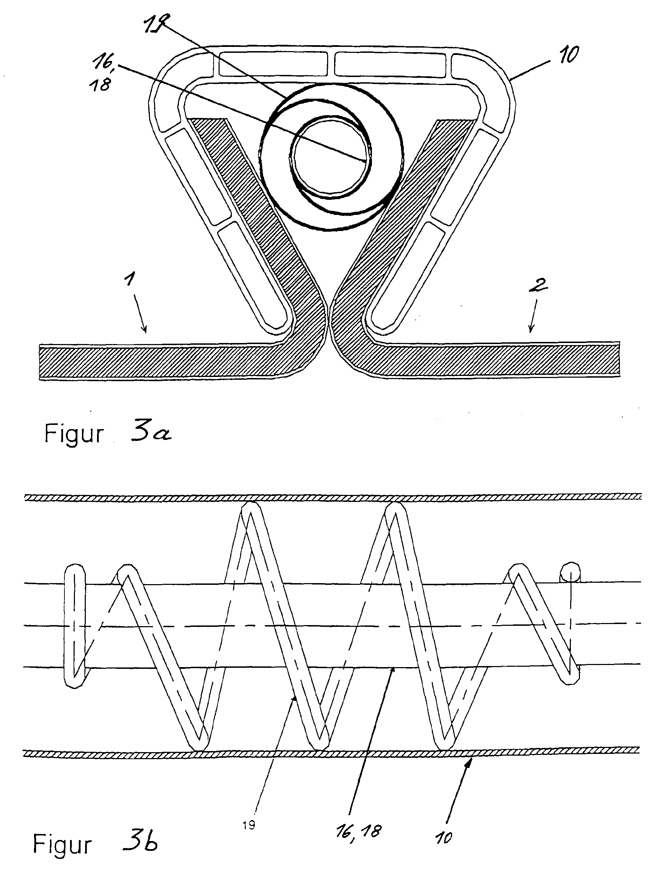

Fig 3a zeigt einen Fügebereich mit den Formkörpern 1 und 2 und der Fügeklammer wie in Fig. 1d vor dem Einbringen von Kunststoffmaterial. In dem umschalten Raum 9 ist ein Strömungskanal 16 mittels eines elastischen Abstandhalters 19 zentriert gehalten. Fig. 3b zeigt einen Teil des Fügebereichs in einem Längsschnitt.

Der Abstandhalter 19 ist eine Spiralfeder, die in einem Abstand um den Strömungskanal 16 gewunden und an ihren beiden Enden auf dem Strömungskanal 16 verschiebbar geführt ist. Vor dem Einführen in den umschalten Raum ist der Durchmesser des Abstandhalters 19 größer als ein Durchmesser eines an die Begrenzung des umschalten Raums 9 angelegten, einbeschriebenen Kreises. Der Strömungskanal 16 kann aus einem flexiblen oder aus einem festen Material bestehen. Er kann geschlossen oder perforiert sein. Der Abstandhalter 19 kann aus Kunststoff oder aus einem Metall hergestellt sein.

Die Form des Abstandhalters 19 ist vorteilhaft für eine spätere Verfüllung mit einem Kunststoffmaterial. Er ist in Längsrichtung des Strömungskanals 16 aufgrund seiner Form streckbar und stauchbar. Sein Durchmesser kann so verändert werden. Er ist ferner biegbar. Sind die Fügeklammer 10 und die Formkörper 1 und 2 verformt, so ist diese Form des Abstandhalters 19 besonders vorteilhaft, da der Abstandhalter 19 das Fügen nicht durch Beibehaltung seiner Form behindert, sondern sich anpasst. Der Abstandhalter 19 folgt dem Querschnitt des umschalten Raums 9 und auch Biegungen.

Fig. 3c zeigt den Fügebereich nach Herstellung des Pressverbunds. Der Strömungskanal 16 ist umgeben von einem warmaushärtenden Harz 20, welches in den umschalten Raum 9 mittels Druck hineingefördert wurde und Ihn zur Gänze ausfüllt. Der umschalte Raum 9 wird über ein geeignetes Anschlusssystem als geschlossenes System ausgelegt, in welches solange flüssiges Harz hineingepumpt wird, bis sichergestellt ist, dass alle Bereiche des umschalten Raums 9 mit dem Harz 20 gefüllt sind.

Im Anschluss an die Befüllung des umschalten Raums 9 mit dem warmeaushärtenden Harz 20 wird durch den Strömungskanal 16 ein auf die Aushärtungstemperatur des Harzes 20 erwärmtes Temperierfluid gepumpt. Das Temperierfluid ist vorzugsweise eine Thermoöl. Die Temperierung wird so lange aufrechterhalten, bis eine durchgängige Aushärtung des Harzes 20 gewährleistet ist.

In einer bevorzugten Ausführungsvariante kann anstatt eines Harzes allein ein mit Verstärkungsmaterial, wie beispielsweise Glas-, Karbon-, Kevlarfaserschnipsel oder Glaskugeln vermischtes Harz in den umschalten Raum 9 eingefüllt und wie vorher beschrieben ausgehärtet werden.

Ebenso kann in den umschalten Raum 9 ein Bündel von Fasern oder ein dem Querschnitt des umschalten Raums 9 angepasst vorgefertigter Faserverbundkörper aus Glas-, Karbon-, Aramid- oder Metallfasern oder anderen geeigneten Fasern eingelegt werden. In einem folgenden Schritt wird das Faserbündel oder der Faserverbundkörper durch Hindurchpumpen einer veträglichen Harzmischung durchtränkt. In einem danach folgenden Schritt wird das Harz wie vorher beschrieben ausgehärtet. Wird ein Faserbündel, ein Faserverbundkörper oder eine andere geometrisch ausgedehnte Verstärkungsstruktur eingebracht, kann die Versträrkungsstruktur den Strömungskanal haltern und ein gesonderter Abstandhalter entfallen.

Der Strömungskanal kann statt zur Temperierung dazu genutzt werden, ein in den umschalten Raum 9 eingelegtes Faserbündel oder einen eingelegten Faserverbundkörper mit einem geeigneten Kunstharz zu durchtränken. In dieser Verwendung wird er als Förderkanal 18 bezeichnet. Ein beispielsweise perforierter Förderkanal 18 ist derart ausgebildet, dass das Harz gleichmäßig durch seine Perforationen quillt. Gegebenenfalls kann auch ein ungleichmäßiger Austritt durch Gestaltung des Förderkanals 18 gezielt erhalten werden, um beispielsweise Querschnittsänderungen des umschalten Raums 9 zu kompensieren.

Der umschalte Raum 9 wird einseitig dicht verschlossen. Das Harz wird durch den Förderkanal 18 mittels einer Schlauchpumpe hineingepumpt. Der Förderkanal 18 muss nicht perforiert sein. Er kann durch eine einfache Röhre gebildet werden mit einem dichten Mantel und einem offenen Ende an dem geschlossenen Ende des Hohlraums. Mittels der Pumpe wird an der offenen Seite des umschalten Raums 9 angesaugt und ein Unterdruck erzeugt. Das derart geschlossen gebildete System wird kontinuierlich durch das Ansaugen entlüftet. Das Einpumpen und Ansaugen wird so lange fortgesetzt, bis der umschalte Raum 9 vollkommen ausgefüllt ist.

Wird für diesen Vorgang warmvernetzendes Harz eingesetzt, so wird die hierfür notwendige Wärmeenergie von außen, zum Beispiel durch Heizmanschetten, oder von innen eingebracht mittels einer Temperiereinrichtung mit einem Strömungskanal für ein Temperierfluid.

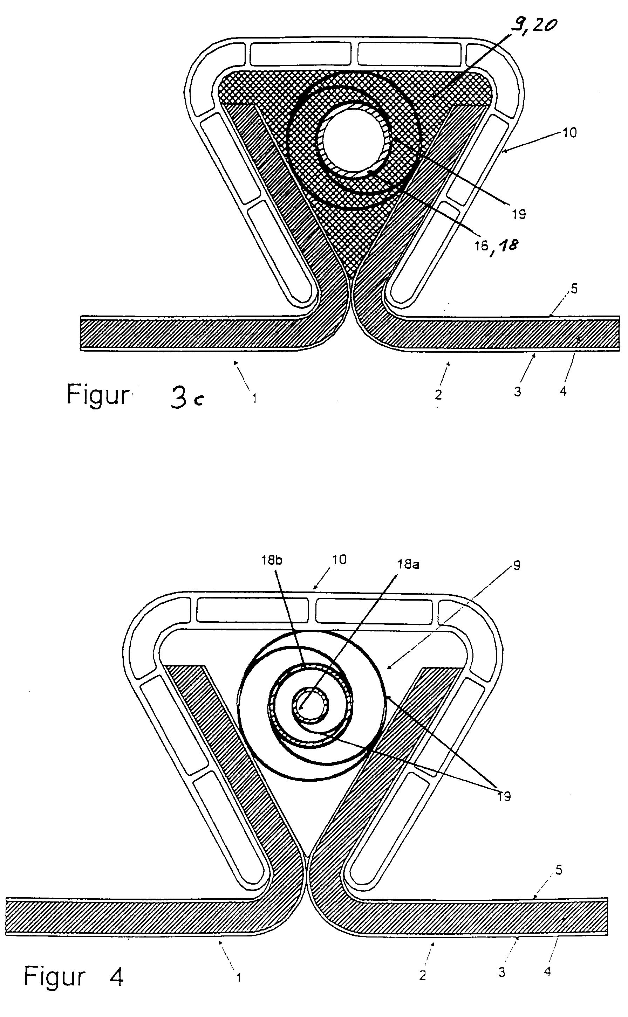

Fig. 4 zeigt einen Fügeverbund mit zwei ineinander liegenden Kanälen 18a und 18b.

Diese Anordnung wird dazu verwendet, um in dem umschalten Raum 9 ein Verfestigungsverfahren für technische Harze mittels einer auf das Harz abgestimmten Druck und Temperaturführung durchzuführen. Dabei wird ein flexibler, perforierter äußerer Strömungskanal 18b als Materialförderkanal analog zum vorhergehenden Ausführungsbeispiel und ein flexibler innerer Strömungskanal 18a als Druckkanal verwendet. Der Druckkanal 18a wird nach vollständiger Befüllung des umschalten Raums 9 mit einem Überdruck zu dem Förderkanal 18b und dem umschalten Raum 9 beaufschlagt. Er kann auch zur Unterstützung des Befüllens bedruckt werden. Um die Außenkontur der Fügeklammer 10 werden Heizelemente angeordnet. Mit dieser Anordnung ist es möglich, reproduzierbare Druck- und Temperatur-Zyklen durchzuführen und somit den Pressverbund mittels vorzugsweise eingebrachten Hochleistungsverbundwerkstoffen, zum Beispiel aus Carbonfaser-Epoxydharz-Mischungen oder Prepregs, kostengünstig zu optimieren.

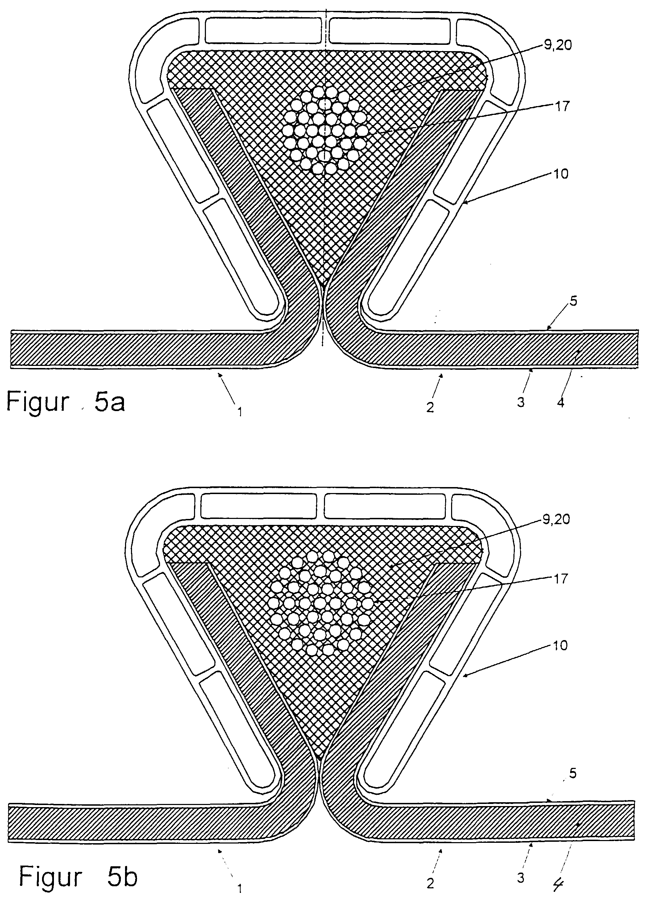

Fig 5a zeigt zwei Formkörper 1 und 2 und eine Fügeklammer 10, die formschlüssig miteinander verbunden sind. In den umschalten Raum 9 wird ein geflochtener, unter Zugspannung gehaltener Verstärkungsfaserstrang 17 eingeführt. Wird dieser Faserstrang 17 entspannt, vergrößert sich sein Querschnitt. Vorzugsweise füllt er den Querschnitt des Hohlraums 9 nach seiner Entspannung zu einem großen Teil aus. Die Entspannung des Faserstrangs 17 ist vorteilhaft für die Verfüllung des verbleibenden umschalten Raums 9 mit einem fließfähigen Füllmaterial 20, vorzugsweise Kunstharz, mittels Druck und die Einbindung der Einzelfasern des Faserstangs 17 in eine kraftschlüssige Faser-Harz-Matrix.

Die Einbindung einer Verstärkungsstruktur, wie der Faserstrang 17 eine ist, ist vorteilhaft, weil es hierdurch möglich ist, die sogenannte Nullage zum Einleiten und zur Aufnahme von Kräften in den Formkörperverbund zu nutzen. So können insbesondere aus solchen Fasersträngen an den Austrittspunkten aus dem Formkörperverbund Anschlagösen geformt werden, mit welchen der Formkörperverbund beispielsweise zu Transportzwecken angehoben wird oder die in der späteren Verwendung des Verbunds Anschlagpunkte zum Einleiten von äußeren Kräften bilden.

Fig 5b zeigt den Faserfilamentstrang 17b nach dem Entfallen der Zugbelastung und der daraus resultiernden Expansion. Der Faserstrang 17b ist vollständig von dem Füllmaterial 20 durchtränkt. Nach dem Aushärten ist der Faserstrang 17b kraftschlüssig mit dem Formkörperverbund verbunden.

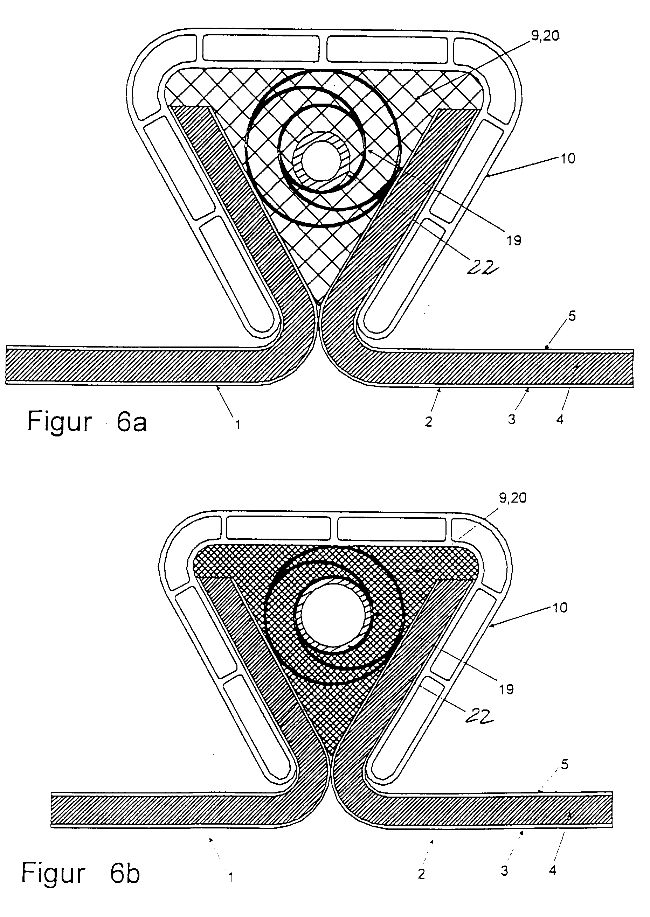

Fig 6a zeigt einen Fügebereich, bei welchem der umschalte Raum 9 mit einer unverdichteten Flüssigharz-Verstärkungsmaterial-Mischung 20 verfüllt wurde. Vor dem Einbringen der Mischung 20 wird ein durchströmbarer, aufweitbarer Druckkanal 22 mittels eines Abstandhalters 19 in den umschalten Raum 9 eingeführt. Der Abstandhalter 19 ist so gestaltet, dass er dem Stömungskanal 16 auch im Bereich seines eigenen engsten Durchmessers genug Raum zur Expansion lässt, um eine Verdichtung der im umschalten Raum 9 eingelagerten, locker gepackten Harz-Verstärkungsmaterial-Mischung 20 überall zuzulassen. Das Verstärkungsmaterial wird durch Füllpartikel gebildet.

Fig. 6b zeigt den Formkörperverbund nach der Aufweitung des Druckkanals 22 durch Beaufschlagung desselben mit Druck. Durch die Aufweitung wird die Mischung 20 verdichtet. Es ensteht eine verdichtete, feste Kunststoffmatrix 20, die den umschalten Raum 9 zur Gänze ausfüllt und so einen festen Pressverbund herstellt. Zur Verfestigung wird das Druckfluid erwärmt, oder es wird unmittelbar heißes Druckfluid durch den Druckkanal 22 gebildet.

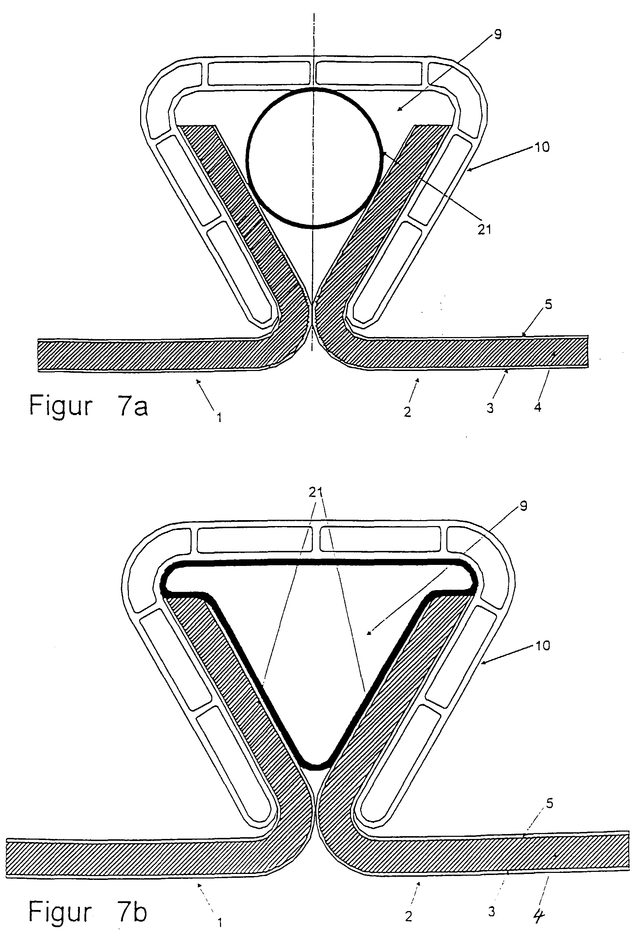

Fig. 7a zeigt einen durchströmbaren Druckkanal 21 aus kaltverformbarem oder halbwarmverformbarem Metall, welcher in den umschalten Raum 9 eingebracht worden ist und das Füllmaterial bildet. Die Wandstärke und der Durchmesser des Druckkanals 21 sind so bemessen, dass ausreichend Material für eine Expansion vorhanden ist, so dass der Druckkanal 21 bei seiner Aufweitung nicht aufgrund ungenügender Materialsubstanz reißt. Die Fügeklammer 10 und die Formkörper 1 und 2 bilden mittels des umschalten Raums 9 ein Formwerkzeug für den aufzuweitenden Druckkanal 21.

Fig. 7b zeigt den Druckkanal 21 nach der Aufweitung mittels Innendruck durch ein kaltes oder halbwarmes Fluid. Der Druckkanal 21 drückt formschlüssig an die Innenkontur des umschalten Raums 9 an, so dass eine feste, form- und kraftschlüssige Verbindung der Formkörper 1 und 2 über die Fügeklammer 10 und mit Hilfe des Druckkanals 21 entstanden ist. Die Formkörper 1 und 2, die Fügeklammer 10 und der umgeformte Druckkanal 21 bilden den verpressten Formkörperverbund.

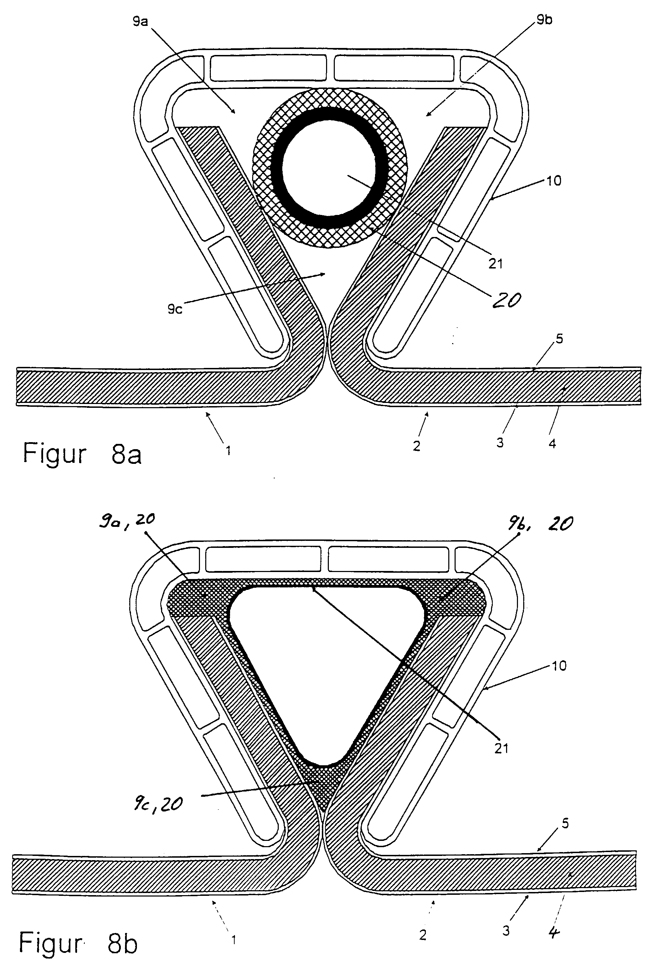

Fig. 8a zeigt eine Modifikation der Anordnung nach Fig. 7a. In dem umschalten Raum 9 ist wieder ein Druckkanal 21 aus einem kaltverformbaren oder halbwarmverformbaren Metall angeordnet. In diesem Anwendungsbeispiel wird als weiteres Füllmaterial 20 ein Profil eines thermoplastischen Materials als Ummantelung des Druckkanals 21 in den umschalten Raum 9 eingeführt. Das Thermoplastprofil 20 kann grundsätzlich jedoch auch alle anderen Formen annehmen, die ein Einführen in den umschalten Raum 9 gestatten.

Der Druckkanal 21 wird von einem Temperierfluid durchströmt und dadurch auf die Schmelztemperatur des Thermoplastprofils 20 erwärmt und dann durch das Temperierfluid mit Druck aufgeweitet. In dieser Phase des Fügeverfahrens umgibt das geschmolzene Material des Thermoplastprofils 20 den aufgeweiteten Druckkanal 21 aufgrund des hydrostatischen Gleichgewichts als Fluid im umschalten Raum 9. Das geschmolzene, thermoplastische Material 20 wird durch den expandierenden Druckkanal 21 in die verbleibenden Hohlräume 9a, 9b, und 9c im umschalten Raum 9 gepresst und dichtet den umschalten Raum 9 dadurch ab.

Unter Aufrechterhaltung des Drucks im Druckkanal 21 wird das warme Fluid im Druckkanal 21 gegen ein kaltes Fluid ausgetauscht. Der aufgeweitete Druckkanal 21 und das thermoplastische Material 23 werden auf Raumtemperatur abgekühlt und verfestigen sich. Somit entsteht ein verpresster und abgedichteter Formkörperverbund. Fig. 8b zeigt den verpressten Formkörperverbund.

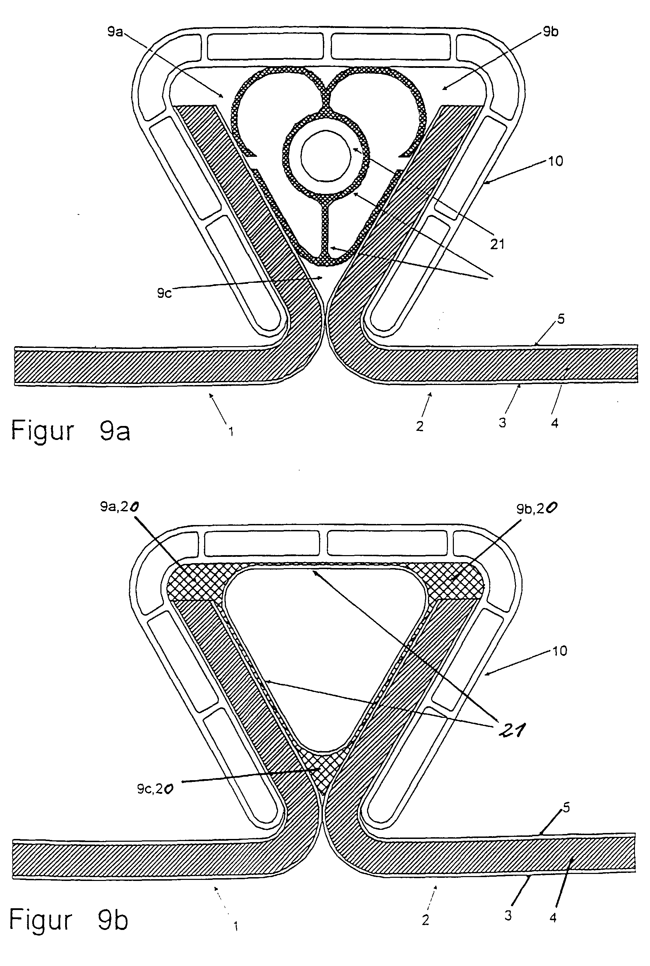

Fig. 9a zeigt eine Weiterentwicklung zu dem vorhergehenden Ausführungsbeispiel. In diesem Fall erfüllt das eingebrachte Thermoplastprofil 20 Funktionen zusätzlich zu den vorbeschriebenen. Das Thermoplastprofil 20 erfüllt gleichzeitig die Funktion eines Abstandhalters, der den Druckkanal 21 in der gewünschten Position hält. Zum anderen erfüllt das Thermoplastprofil 20 die Funktion einer Fixierfeder, welche bereits allein die Formkörper 1 und 2 und die Fügeklammer 10 in der gewünschten Position hält.

Fig. 9b zeigt den Verbund nach dem Verpressen. Die Verpressung erfolgt in gleicher Weise wie bei dem Verfahren des Ausführungsbeispiels der Figuren 8a und 8b.

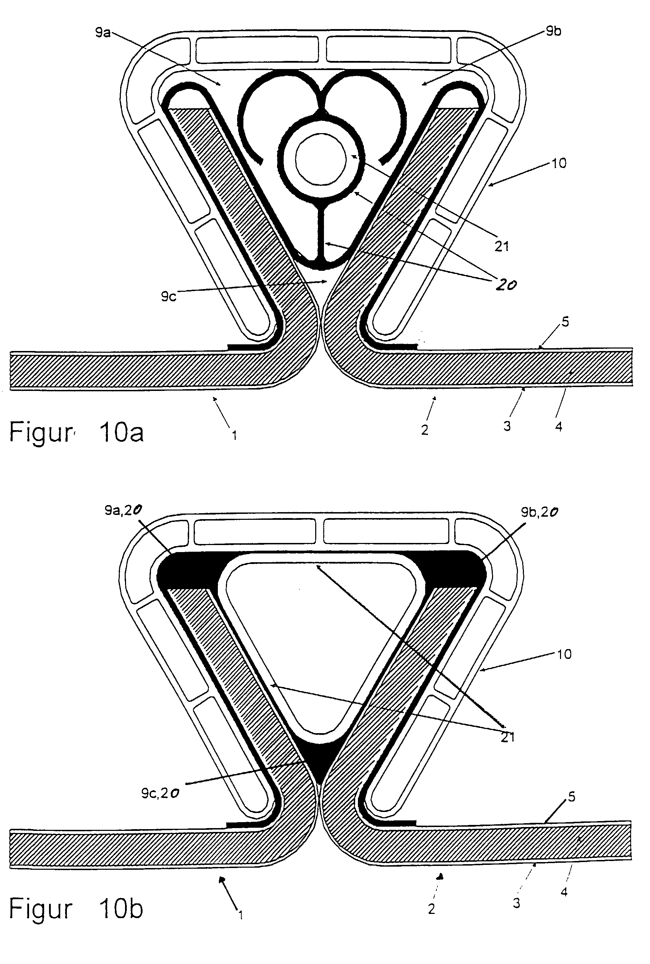

Fig. 10a zeigt eine weitere bevorzugte Ausführung eines Thermoplastprofils 20. In diesem Fall erfüllt das eingebrachte Thermoplastmaterial zusätzlich zu den im Zusammenhang mit den Fig. 8 und 9 dargestellten Funktionen die weitere Funktion des Korrossionsschutzes. Dies wird dadurch erreicht, dass das Thermoplastprofil 20 aus dem umschalten Raum 9 durch die Öffnung 12 der Fügeklammer 10 herausgeführt ist und die Innenbereiche der Biegeradien der Anschlussprofile 6 abdeckt. Das Thermoplastprofil 20 bildet eine Trennschicht zwischen der Fügeklammer 10 und den Formkörpern 1 und 2.

Fig. 10b zeigt den Verbund nach dem Verpressen. Die Verpressung erfolgt analog zu dem Verfahren der Ausführungsbeispiele der Figuren 8 und 9. Das Thermoplastprofil 20 bildet eine Sperrschicht zwischen der Fügeklammer 10 und den Formkörpern 1 und 2. Durch gute Isolationseigenschaften der Thermoplaste kann somit einer Kontaktkorrosion entgegen gewirkt werden. Die Formgebung des Thermoplastprofils 20 gleichzeitig auch als Korrossionsschutzprofil ermöglicht die gemeinsame Verwendung von in der Kombination korrosionskritischen Werkstoffen, zum Beispiel Edelstahl und Aluminium. Es verhindert auch das Eindringen von elektrisch gut leitenden Medien in den Formkörperverbund und damit das Entstehen galvanischen Ströme, welche wiederum Korrosion bei ungleichen Metallen hervorrufen.

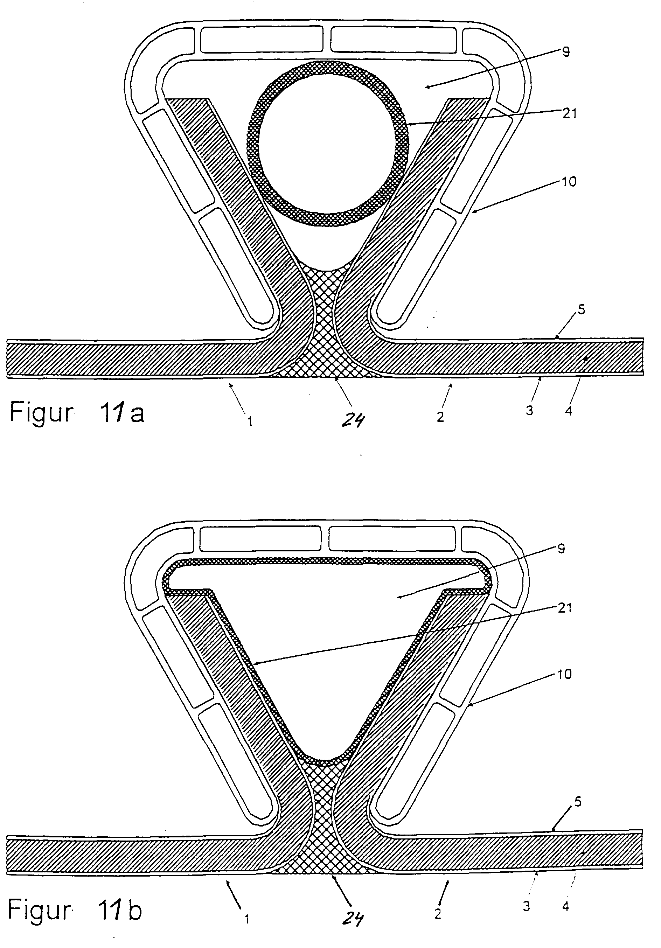

Die Fig. 11a und 11b zeigen eine Weiterentwicklung zu dem Ausführungsbeispiel der Fig. 7a und 7b, die jedoch gleichermaßen bei allen Ausführungbeispielen vorgenommen werden kann. In dem Fügebereich ist ein Abschlussprofil 24 in einen Spalt im Stoßbereich der Formkörper 1 und 2 zur Abdichtung des Spalts eingesetzt. Das Abschlussprofil 24 gleicht Ungleichmäßigkeiten aus, die aus der Verwendung von Formkörpern 1 und 2 mit unterschiedlichen Wandstärken resultieren können. Es gleicht auch eine Kavität auf der der Fügeklammer 10 gegenüberliegenden Seite des Formkörperverbunds aus.

Die den Formkörpern 1 und 2 bzw. den Anschlussprofilen 6 zugewandten Flächen des Abschlussprofils 24 folgen den Konturen der Formkörper 1 und 2 als Negativformen. Das Abschlussprofil 24 läuft in dem umschalten Raum 9 in dünnwandige Lippen aus, die bündig an den von den Anschlussprofilen 6 gebildeten Innenwänden des umschalten Raums 9 anliegen. An seiner dem umschalten Raum 9 abgewandten Seite folgt das Abschlussprofil 24 der Kontur der auseinander weisenden Formkörper 1 und 2 50 weit, bis es die Höhenlinie der für den Formkörperverbund angestrebten Oberfläche erreicht hat. Durch das Abschlussprofil 24 wird eine plane Oberfläche der dem umschalten Raum 9 gegenüberliegenden Außenkontur erreicht.

Sofern zur Verpressung des Formkörperverbunds keine Kunststoffmaterialien verwendet werden, wie im dargestellten Ausführungsbeispiel, kommt es zum direkten Kontakt zwischen dem aufgeweiteten Strömungskanal 21 und dem Abschlussprofil 24. Bestehen sowohl der Strömungskanal 21 als auch das Abschlussprofil 24 aus einem metallischen Material, so kann thermische Energie mit guter Wärmeleitfähigkeit auf die der Fügeklammer 10 gegenüberliegende Seite des Formkörperverbunds aus dem Fügebereich abgeführt werden.

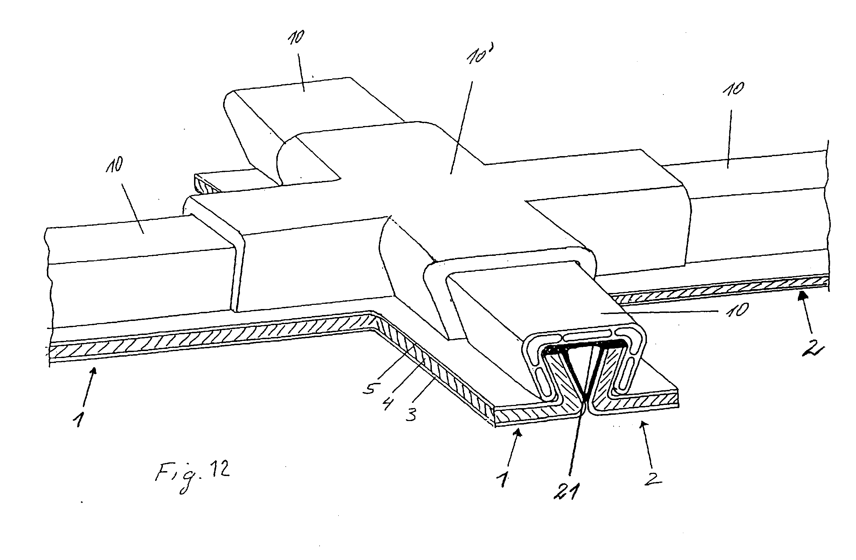

Figur 12 zeigt einen Kreuzverbund von vier Formkörpern 1 und 2. Zwischen aneinander liegenden Paaren der Formkörper 1 und 2 besteht je die Fügeverbindung gemäß den Fig. 7a und 7b. In der Darstellung wird stellvertretend auch für andere Fügeklammern wieder die Fügeklammer 10 der Fig. 1d zur Herstellung jeder dieser Fügeverbindungen verwendet. In Bezug auf die paarweise Verbindung von Formkörpern 1 und 2 wird auf die Beschreibung des Ausführungsbeispiels der Fig. 7a und 7b verwiesen. Jede der einzelnen Fügeverbindungen kann alternativ auch durch die Fügeverbindung eines der anderen Ausführungsbeispiele gebildet werden.

In einem gemeinsamen Kreuzungsbereich sind vier Formkörper mit ihren Seitenkanten aneinanderstoßend ausgerichtet und in dieser, für den dargestellten Kreuzverbund gewünschten, relativen Lage zueinander fixiert. Eine kreuzförmige Fügeklammer 10' erfüllt die Funktion eines Brückenelements, welches alle Fügeklammern 10 umklammert. Das Brückenelement 10' weist vier senkrecht zueinander stehende Schenkel auf, die von einem Mittelbereich des Brückenelements 10' abstehen. Das Brückenelement 10' kann einstückig oder aus mehreren Teilen zusammengesetzt sein, die beispielsweise miteinander verschweißt, verschraubt oder anderweitig geeignet miteinander verbunden sind. Jeder der Schenkel des Brückenelements 10' weist in einem Einlassbereich im Querschnitt die Form der Fügeklammer 10 des Ausführungsbeispiels der Figur 1d auf.

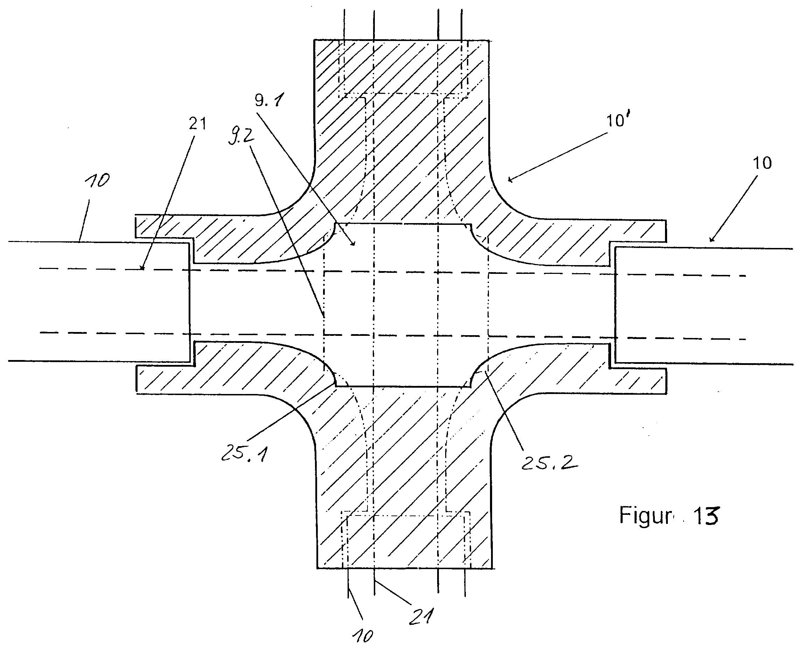

Fig. 13 zeigt den Innenraum des Brückenelements 10' in einem Schnitt. Das Brückenelement 10' weist vier Einlassbereiche auf, in die je eine der Fügeklammern 10 hineinragt. Die Druckkanäle 21 werden in einem Kreuzungsbereich des Brückenelements 10' separat voneinander aufgenommen, wobei im Ausführungsbeispiel je zwei der Druckkanäle 21 der Einzelfügebereiche in der Flucht zueinander liegen und durch einen einzigen, durchgehenden Druckkanal 21 gebildet werden. Es kreuzten sich daher im Kreuzungsbereich des Brückenelements 10' zwei Druckkanäle 21. Für jeden dieser beiden Druckkanäle 21 ist ein Hohlraum 9.1 bzw. 9.2 im Brückenelement 10' ausgebildet. Der Schnitt der Figur 13 liegt in dem Hohlraum 9.1. Der Hohlraum 9.1 könnte zwischen den einander gegenüberliegenden Einlassbereichen des Brückenelements 10' die Form einer einfachen Bohrung haben. Bevorzugt wird jedoch im Kreuzungsbereich die Ausbildung einer Verbreiterung durch Hinterschneidungen 25.1. Durch die Ausbildung der voneinander separierten Hohlräume 9.1 und 9.2 wird verhindert, dass die kreuzenden Druckkanäle 21 sich bei ihrer Expansion gegenseitig zudrücken können. Die Form des Hohlraums 9.1 bewirkt, dass der darin aufgenommene Druckkanal 21 sich in die Hinterschneidungen 25.1 des Hohlraums 9.1 hinein aufweitet, was zu einer zusätzlichen Befestigung des Fügeverbunds in der Längsrichtung dieses Druckkanals 21 führt. In der darunter befindlichen, punktstrichliert dargestellten Ebene geschieht dies im Rahmen der Verpressung in den dort ausgebildeten Hohlraum 9.2 mit Hinterschneidungen 25.2 analog in einem Winkel von 90° Schnittebene.

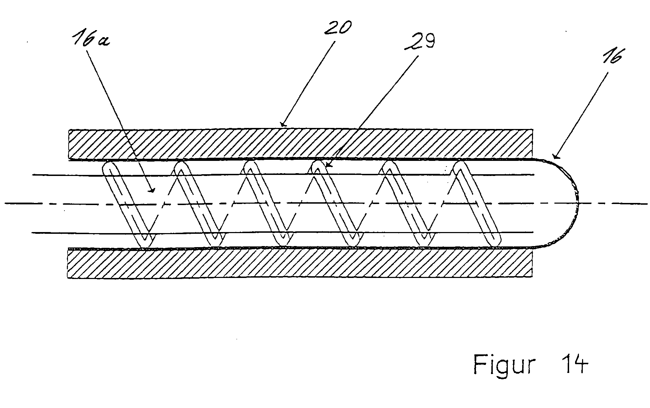

Fig. 14 zeigt in einem Längsschnitt ein aus zwei ineinanderliegenden Strömungskanälen 16 und 16a bestehendes Strömungskanalpaar, das in einem Bereich mit Füllmaterial 20 angeordnet ist. Das Strömungskanalpaar wird durch einen äußeren Strömungskanal 16 und einen darin konzentrisch gelagerten inneren Strömungskanal 16a gebildet. Der äußere Strömungskanal 16 steht in direktem Kontakt zu dem umgebenden Füllmaterial 20. Der äußere Strömungskanal 16 ist an einem Ende geschlossen, d.h. er ist als Sackkanal ausgebildet. An seinem offenen anderen Ende ist der äußere Strömungskanal 16 an eine Temperiereinrichtung angeschlossen. Durch das offene Ende ragt der innere Strömungskanal 16a in den äußeren Strömungskanal 16 hinein und reicht bis nahe an dessen geschlossenes Ende heran. Zwischen dem inneren Strömungskanal 16a und dem äußeren Strömungskanal 16 verbleibt über die gesamte Länge, mit der der innere Strömungskanal 16a in den äußeren Strömungskanal 16 hineinreicht, ein Ringspalt. Um diesen Ringspalt zu erhalten, ist der innere Strömungskanal 16a mit einem Band 29 aus einem Fasermaterial, beispielsweise einem Kohlefaserverbundmaterial, spiralig umschlungen. Das Band 29 erfüllt die zwei Funktionen der Lagerung des inneren Strömungskanals 16a in dem äußeren Strömungskanal 16 und der Herstellung eines möglichst guten Wärmeübergangs von der äußeren Mantelfläche des inneren Strömungskanals 16a auf die innere Mantelfläche des äußeren Strömungskanals 16. Zu diesem Zweck sind in das temperaturbeständige Grundmaterial des Bands 29 Fasern eines weiteren Materials eingewebt, das eine gegenüber dem Grundmaterial hohe Wärmeleitfähigkeit besitzt. Das Grundmaterial kann beispielsweise durch Kohlefasern und das demgegenüber besser wärmeleitende Material durch ein metallisches Material gebildet werden. Eine dritte Funktion erfüllt das Band 29 durch die spiralige Aufwicklung auf dem inneren Strömungskanal 16a. Durch das spiralige Aufwickeln des Bands 29 entsteht in dem Ringraum zwischen den beiden Kanälen 16a und 16 ein spiralenförmiger bzw. gewindeförmiger Rückströmkanal für das Temperierfluid. Das Temperierfluid wird durch das spiralige Aufwickeln des Bands 29 auf dem inneren Strömungskanal 16a auf einem hierdurch verlängerten Strömungsweg zur Temperiereinrichtung zurückgeführt und insbesondere verwirbelt, so dass eine turbulente Rückströmung mit einer gegenüber einer laminaren Rückströmung erhöhten Wärmeübertragung durch den Ringspalt hindurch stattfindet.

Zum Aufschäumen des Füllmaterials 20 wird von der Temperiereinrichtung heißes Temperierfluid durch den inneren Strömungskanal 16a eingeleitet. Das eingeleitete Temperierfluid durchströmt den inneren Strömungskanal 16a bis zu dessen vorderen Ende, umströmt die vordere Kante des inneren Strömungskanals 16a nach außen und strömt im gewindeförmigen Rückströmkanal durch das Band 29 geführt, mehrfach um den inneren Strömungskanal 16 herum wieder zurück zur Temperiereinrichtung. Das rückströmende Temperierfluid heizt das Füllmaterial 20 bis auf Aufschäumtemperatur, gegebenenfalls ein Stück darüber, auf. Durch den Wärmetausch im Gegenstrom wird im außen strömenden Temperierfluid eine besonders gleichmäßige Temperatur eingestellt. Entsprechend gleichmäßig ist der Temperatur des Füllmaterials 20.

Die Innentemperierung wird erfindungsgemäß nicht nur zum Aufheizen des Füllmaterials 20, sondern vorzugsweise auch zum kontrollierten Abkühlen des Füllmaterials 20 verwendet. Hierfür wird die Temperatur des außen strömenden Temperierfluids nach Verlassen des Bereichs mit dem Füllmaterial 20 gemessen. Die Messung erfolgt vorzugsweise mittels eines Temperatursensors, der in dem Rückströmkanal angeordnet ist. Der Sensor kann in dem Teil des Rückströmkanals angeordnet sein, der in dem Fügebereich liegt und so die Temperatur des Temperierfluids unmittelbar im Bereich des Aufschäumens messen. Er kann jedoch auch in einem außerhalb des Fügebereichs liegenden Teil des Rückströmkanals angeordnet sein. Wird das Temperierfluid in einem Kreislauf geführt, so kann solch ein Temperatursensor auch an jeder anderen geeigneten Stelle im Kreislauf angeordnet sein, solange hieraus sichere Rückschlüsse auf die Temperatur im Fügebereich gezogen werden können. Das Temperierfluid muss nicht in einem geschlossenen Kreislauf geführt werden, sondern kann auch durch die Temperiereinrichtung erzeugt und nach Durchströmen des inneren Strömungskanals 18a und des äußeren Strömungskanals 16 einfach an die Umgebung abgegeben werden, gegebenenfalls nach einer Reinigung.

Die gemessene Temperatur wird mit einer vorgegebenen Maximaltemperatur verglichen. In Abhängigkeit von dem Vergleich wird der Heizvorgang weitergeführt oder abgebrochen. Wird beispielsweise die vorgegebene Maximaltemperatur erreicht oder über einen vorgegebenen Zeitraum hinweg erreicht oder überschritten, so schaltet die Temperiereinrichtung ab oder um von Heizen auf Kühlen. Ein Kühlvorgang kann bei Erreichen oder Unterschreitung einer vorgegebenen Temperatur, die mit dem gleichen Temperatursensor gemessen werden kann, abgebrochen werden. Der Temperatursensor kann vorteilhafterweise in das Band 29 eingearbeitet sein. Umfasst die Temperiereinrichtung zur Energieerzeugung einen Verbrennungsmotor mit Turbolader, so kann die Innentemperierung dadurch erfolgen, dass als Heizfluid die Abluft des Verbrennungsmotors und als Kühlfluid die Zuluft zu dem Lader verwendet wird. Bei einem Umschalten wird von der Abluft auf Zuführung der Zuluft umgeschaltet. Eine temperaturkontrollierte Temperierung mit einer kontrollierten Erwärmung und gegebenenfalls auch Abkühlung des Fügematerials ist für die Herstellung und Festigkeit des Formkörperverbunds auch bei allen anderen offenbarten Ausführungen eines Strömungskanals vorteilhaft.

## Patentansprüche

1. Fügeverfahren zum Verbinden von Formkörpern, bei dem
a) ein erster Formkörper (1) und ein zweiter Formkörper relativ zueinander (2) fixiert werden,
b) mittels einer Fügeklammer (10) in einem Fügebereich der Formkörper (1, 2) ein Raum (9) umschalt wird, in den jeder der Formkörper (1, 2) hineinragt,
c) und in dem umschalten Raum (9) ein Füllmaterial (20; 21; 20, 21) verfestigt oder einer Verfestigung überlassen wird, derart, dass
d) die Formkörper (1, 2) in dem umschalten Raum (9) durch die Fügeklammer (10) und das verfestigte Füllmaterial (20; 21; 20, 21) zu einem festen Verbund verpresst werden.

2. Fügeverfahren nach Anspruch 1, dadurch gekennzeichnet, dass
- an jedem Formkörper (1, 2) wenigstens ein Anschlussprofil (6) ausgebildet wird,
- die Formkörper (1, 2) mit ihren Anschlussprofilen (6) aneinander gelegt werden
- und eine separate Fügeklammer (10) die Anschlussprofile (6) umgreifend angelegt und dadurch der umschalte Raum (9) gebildet wird.

3. Fügeverfahren nach einem der vorhergehenden Ansprüche, dadurch gekennzeichnet, dass das Füllmaterial (20; 21; 20, 21) erst in dem umschalten Raum (9) in einen fließfähigen Zustand gebracht oder bereits in einem fließfähigen Zustand in den umschalten Raum (9) eingebracht wird.

4. Fügeverfahren nach einem der vorhergehenden Ansprüche, dadurch gekennzeichnet, dass das Füllmaterial (20; 21; 20, 21) mittels eines in dem umschalten Raum (9) angeordneten Strömungskanals (16) für ein Temperierfluid von innen temperiert wird.

5. Fügeverfahren nach einem der vorhergehenden Ansprüche, dadurch gekennzeichnet, dass das Füllmaterial (20) in dem umschalten Raum (9) erwärmt und dadurch ausgehärtet wird.

6. Fügeverfahren nach einem der vorhergehenden Ansprüche, dadurch gekennzeichnet, dass
- in dem umschalten Raum (9) wengistens ein Förderkanal (18; 18a, 18b) angeordnet ist
- und das fließfähige Füllmaterial (20) durch den Förderkanal (18; 18a, 18b) in den umschalten Raum (9) eingebracht wird.

7. Fügeverfahren nach einem der vorhergehenden Ansprüche, dadurch gekennzeichnet, dass
- in dem umschalten Raum (9) wenigstens ein aufweitbarer Druckkanal (18a, 18b; 21; 22) angeordnet ist,
- der Druckkanal (18a, 18b; 21; 22) durch Druckbeaufschlagung aufgeweitet wird
- und durch die Aufweitung des Druckkanals (18a, 18b; 21; 22) Füllmaterial (20) in dem umschalten Raum (9) verpresst wird.

8. Fügeverfahren nach dem vorhergehenden Anspruch, dadurch gekennzeichnet, dass durch den Druckkanal (18a, 18b; 21) ein Heizfluid geleitet und dadurch das Füllmaterial (20) geschmolzen wird.

9. Fügeverfahren nach einem der vorhergehenden Ansprüche, dadurch gekennzeichnet, dass das Füllmaterial (20) durch Kunststoffmaterial gebildet wird oder Kunststoffmaterial umfasst.

10. Fügeverfahren nach dem vorhergehenden Anspruch, dadurch gekennzeichnet, dass
- in den umschalten Raum (9) ein Faserbündel oder ein Faserverbundkörper (17) eingelegt ist
- und das Kunststoffmaterial (20) das Faserbündel oder den Faserverbundkörper (17) durchtränkt.

11. Fügeverfahren nach einem der zwei vorhergehenden Ansprüche, dadurch gekennzeichnet, dass
- in dem umschalten Raum (9) wenigstens ein perforierter Strömungskanal (16) angeordnet ist,
- durch den Strömungskanal (16) ein Reaktionsfluid in den umschalten Raum (9) eingeleitet
- und das Kunststoffmaterial dadurch zum Aushärten oder Aufschäumen gebracht wird.

12. Fügeverfahren nach einem der Ansprüche 1 bis 9, dadurch gekennzeichnet, dass
- in dem umschalten Raum (9) wenigstens ein Druckkanal (21) aus einem kaltverformbaren oder halbwarmverformbaren, metallischen Material angeordnet ist,
- der Druckkanal (21) mit einem Druckfluid beaufschlagt und dadurch aufgeweitet wird
- und die Formkörper (1, 2) in dem umschalten Raum (9) nur durch den das Füllmaterial bildenden aufgeweiteten Druckkanal (21) zu dem Verbund verpresst werden.

13. Fügeverfahren nach einem der vorhergehenden Ansprüche, dadurch gekennzeichnet, dass das Füllmaterial (20) so in dem umschalten Raum (9) angeordnet wird, dass es in dem verpressten Verbund eine Trennschicht zwischen einander gegenüberliegenden Flächen der Formkörper (1, 2) oder zwischen einander gegenüberliegenden Flächen von wenigstens einem der Formkörper (1, 2) und der Fügeklammer (10) bildet.

14. Verbund von Formkörpern, in dem
a) die Formkörper (1, 2) mittels einer Fügeklammer (10) zusammengefügt sind,
b) die Fügeklammer (10) allein oder zusammen mit den Formkörpern (1, 2) einen Raum (9) umschalt,
c) jeder der Formkörper (1, 2) in den umschalten Raum (9) hineinragt,
d) der umschalte Raum (9) mit einem verfestigten Füllmaterial (20; 21; 20, 21) teilweise oder gänzlich ausgefüllt ist,
e) und die Formkörper (1,2) in dem umschalten Raum (9) durch die Fügeklammer (10) und das Füllmaterial (20; 21; 20, 21) zu dem Verbund verpresst sind.

15. Verbund nach dem vorhergehenden Anspruch, dadurch gekennzeichnet, dass von jedem Formkörper (1, 2) wenigstens ein Anschlussprofil (6) abragt, das von der Fügeklammer (10) umgriffen wird.

16. Verbund nach einem der vorhergehenden Ansprüche, dadurch gekennzeichnet, dass in dem umschalten Raum (9) wenigstens ein Kanal (16; 18; 18a, 18b; 21; 22) mit einem zur Durchleitung eines Fluids ausreichenden Querschnitt ausgebildet ist.

17. Verbund nach einem der vorhergehenden Ansprüche, dadurch gekennzeichnet, dass das Füllmaterial durch ein metallisches Material (21), das kaltverformbar oder halbwarmverformbar ist, und/oder Kunststoffmaterial (20) gebildet wird oder wenigstens eines dieser Materialien umfasst.

18. Verbund nach einem der beiden Ansprüche, dadurch gekennzeichnet, dass eine in den umschalten Raum (9) eingelegte Verstärkungsstruktur (17) aus dem umschalten Raum (9) herausgeführt und als Haltemittel, insbesondere als Anschlagpunkt, ausgebildet ist.
